# EUROPEAN PATENT APPLICATION

(11) **EP 1 260 906 A1**
(43) Date of publication of application: **27.11.2002**
(21) Application number: 01922051.6
(22) Date of filing: 24.04.2001
(51) Int. Cl.: G06F 12/00, G06F 13/00, G06F 15/00

(54) **ACCESS RIGHT SETTING DEVICE AND MANAGER TERMINAL**

(30) Priority: 24.04.2000 JP 2000122681
(71) Applicant: MATSUSHITA ELECTRIC INDUSTRIAL CO., LTD, Kadoma-shi, Osaka 571-0000 (JP)
(72) Inventor: UEDA, Masaomi, Urawa-shi, Saitama 336-0015 (JP); ISHIKAWA, Akira, Kawasaki-shi, Kanagawa 214-0022 (JP); MITOH, Takashi, Maebara-shi, Fukuoka 819-1112 (JP)
(74) Representative: Casalonga, Axel
(86) International application number: JP0103515
(87) International publication number: WO01082086

(57) **Abstract**

There is disclosed a system including an access right setting apparatus and manager terminal in which a user having an access to a resource of a network limited issues a request, and thereby an access right can easily be set, and the user who desires to access the resource describes set contents of the access right, such as the resource, time, and access content, in access request information 303, and transmits the information to an access right setting apparatus 100 for managing the access right in the system. The received access request information 303 is transferred to a manager of the resource by access request information transfer means 102, and the manager simply confirms a request content and makes judgment of approval, so that the access right setting apparatus 100 automatically sets the access right.

## Description

### TECHNICAL FIELD

The present invention relates to an access right setting apparatus and system in which an access right can be set by a request from a user who uses resources existing on a network and usable in a limited manner.

### BACKGROUND ART

In a conventional art, when a plurality of users access resources on a network, information of access rights of the users is held in a computer for managing the resources, and an access control is performed based on the information. Here, the user represents a person, program, process (in actual, the person prepares and executes the program or the process), and the like, and the resources include a file, memory, program, process, apparatus, and the like.

The access right information generally relates to access forms such as referring (confirming existence of the resource), reading (seeing a content of the resource), writing (rewriting the content of the resource), deletion (deleting the resource from a recording medium), and execution (executing the program) by each user unit or by a group unit to which the user belongs, and it is described whether or not an access is permitted.

A method of setting the access right in a general network OS (operating system) will be described. A manager of the network registers a user ID (user identifier) necessary for accessing the network with respect to the user (utilizer), and sets permission of a remote access, so that the access is possible. Additionally, the manager of the network can also set an access period, grouping of the users, and the like. Examples of the resource accessible by the user include a resource in a machine managed mainly on one's own, a resource with an access thereto from an external user permitted by the manager of each machine, and the like.

For the set content of the access right, usually the manager of the resource sets the content, and the user of the resource cannot set the content. If the user of the resource accesses the resource without any access right, a request for changing the access right is conveyed to the manager by some means.

Moreover, there is a concept of a guest ID as accessing means for the user who does not have the user ID of the network. In general, a password necessary for log-in to the network with the guest ID is known, and anyone can access the network, but the accessible resource is remarkably limited in security so that any trouble does not occur with the network. In any case, the user cannot set the access right.

A system in which the user conveys an access request to the manager via the network, and sets the access right is disclosed in Japanese Patent Application Laid-Open No. 5-006322. When the user having no access right accesses the resource, the manager is notified of the change request of the access right, and the manager changes the access right so as to permit the access in the setting system of the access right.

In the present invention, realization is considered in a home network which is constructed particularly in a general household by connecting network electrical household appliances. Many of managers (home persons) who manage the resources (network electrical household appliances) in the home network usually have no knowledge of the network, and it can be said that it is difficult to process setting of the access right having a complicated condition. Moreover, the user of the resource is of course the home person, but a case in which an external business person uses the resource to provide a service is considered. Service examples include remote medical treatment, remote monitor, remote maintenance, and the like. As described above, since it is difficult for the home person as the manager to set the access right, a simple setting system is considered, that is, the external business person as the user provides the set content of the access right, the home person judges registration of access right information, or performs only a simple operation.

When the home network described above is utilized, problems in the conventional art are as follows.

As a first problem, it is impossible not for the manager but for the user to designate the set content of the access right (a period for applying the access right, access content, other accessible conditions, and the like).

As a second problem, a request of access right setting has to be transmitted to an apparatus which manages the access right under a leadership of the user.

As a third problem, the person has to manage the access right, and a setting processing of the access right is delayed when the person is absent on the site, or a case in which the request for setting the access right is frequently made is troublesome.

As a fourth problem, a user who cannot communicate with (hereinafter referred to as cannot log in) the network holding the resource to be utilized (hereinafter referred to as an access object resource) for the access to the resource cannot make the request for setting the access right. Moreover, the manager requires a special knowledge of setting of the user ID for log-in.

As a fifth problem, when the user does not know an identifier for uniquely specifying the resource to be utilized, the user cannot designate the access object resource to be permitted for the access in access request information.

As a sixth problem, when the third problem is solved, the designated access object resource cannot be selected on a user side.

As a seventh problem, when the first problem is solved, the user can designate the set content of the access right, but further the manager desires to perform a detailed designation in some case.

As an eighth problem, the user desires to know a classification of the resource existing in the network in some case.

As a ninth problem, when the first problem is solved, and when the user illicitly prepares the access request information, the setting of a content other than a content indicated to the manager (person) is possibly performed.

As a tenth problem, when the first problem is solved, it is difficult to objectively judge reliability of the set content of the access right designated by the user.

As an eleventh problem, even when a manager's terminal is a mobile terminal, the first or second problem desires to be solved.

As a twelfth problem, even when the manager's terminal is the mobile terminal, the sixth problem desires to be solved.

As a thirteenth problem, even when the manager's terminal is the mobile terminal, the seventh problem desires to be solved.

### Disclosure of the Invention

According to the present invention, in order to solve the aforementioned problems, a user having no user ID of a network designates a set content of an access right (the set content of the access right designated by the user for a setting request of the access right will hereinafter be referred to as "access request information") with respect to a resource of the network whose existence and identifier are not known. This enables the setting of the access right without imposing any burden onto a manager, further the user and access request information are reliable, and a system in which the access right is prevented from being illicitly changed without letting the manager know that is realized. Furthermore, a system in which the manager can change the access request information designated by the user is also realized.

Additionally, in a setting system of the access right described in Japanese Patent Application Laid-Open No. 1993-006322, solving means of a case in which the user does not know the identifier of the resource to be utilized, or a case in which the user does not have the user ID of the network is not described. Moreover, the manager sets the access right in more detail, but a designated content of the access right is limited for the user.

To solve the problem, according to the present invention, firstly, there are provided means for preparing access request information to be designated by a user, means for receiving the access request information designated by the user, means for transferring the access request information to a manager, means for the manager to judge whether or not setting can be performed based on the access request information, and means for setting the access request information designated by the user as access right information in accordance with a manager's permission judgment, so that necessity of a complicated setting of the access right by the manager is obviated, and the user can designate the set content of the access right.

Secondly, there are provided means for the user to once store the prepared access request information in a position which can be seen from a manager side, and means for acquiring the access request information from the manager side, so that the access right can easily be set under a leadership of the manager.

Thirdly, means for automatically judging whether or not the access request information can be set as the access right information by a machine is disposed in a manager's terminal. Even when a person does not attend at a user's terminal, the machine automatically performs the judgment. Moreover, even an intricate operation in a case in which the access request information is frequently transmitted can be handled by automation by the machine.

Fourthly, there is provided means for preparing a user's user ID necessary for user authentication during log-in to the network, and registering the ID as a part of the access right information. Thereby, even the user who cannot log in the network, and has no user ID can make a request for setting the access right to the manager.

Fifthly, an access object resource can be described in classification information which is known to both the user and the manager and which is constituted by abstracting the resource. Thereby, even when the user incapable of logging in the network does not know a concrete identifier of the resource, the request for setting the access right can be made.

Sixthly, the access object resource desired to be utilized by the user is designated by the information of the classification as described in the third solving means, and there is provided means for selecting the resource whose use is to be permitted by the manager. Thereby, the access object resource can uniquely be determined. Additionally, it is possible to set the access right in which a manager's will is respected.

Seventhly, there is provided means by which the manager can also change the content described in the access request information presented to the manager by the means for transferring the access request information. Thereby, it is possible to more flexibly set access information in which the manager's will is respected, instead of designating the set content of the access right in one direction only by the user.

Eighthly, there is provided means by which the user can acquire the information of the accessible resource disposed in the network. Even the user who does not know the identifier of the resource can acquire the existence of the resource and the information, and the information can be taken into the access request information.

Ninthly, there is provided means for preparing display information by a natural language presented to the manager as the person based on the access request information prepared by the user. This prevents the access right from being illicitly set in accordance with access request information illicitly prepared by a malicious user, and the content of the access request information can accurately be conveyed to the manager.

A representation such as program and code prepared by the person so that the representation can be understood by the machine is called an artificial language, and an original representation of UI (user interface) information such as sound, image, and character which can be understood by the person is called the natural language.

Tenthly, there is provided means for authenticating the received access request information to which a digital signature by a reliable CA (Certificate Agency) has been applied. Thereby, it is possible to judge whether or not the user or the access request information is reliable, and whether or not there is a fear of falsification or pretense.

Eleventhly, mean for transferring the received access request information to the mobile terminal, and means by which it can be judged by the mobile terminal whether or not the access request information may be set as the access right information are disposed on an access right setting apparatus. Thereby, even when the manager does not attend at a manager's terminal, and goes out, it is possible to easily set the access right.

Twelfthly, the user designates the access object resource desired to utilize by the information of the classification, and means for selecting the resource whose utilization is to be permitted by the mobile terminal is disposed in the access right setting apparatus. Thereby, even when the manager does not attend at the manager's terminal, and goes out, it is possible to easily select the access object resource.

Thirteenthly, there is provided means by which the content of the access request information presented to the manager by the means for transferring the access request information for the mobile terminal can be changed by the mobile terminal. Thereby, even when the manager does not attend at the manager's terminal, and goes out, it is possible to easily change the content described in the access request information.

### BRIEF DESCRIPTION OF THE DRAWINGS

FIG. 1 is a diagram showing a whole constitution of an access right setting system in a first embodiment of the present invention,
FIG. 2 is a diagram showing one example of access request information of FIG. 1,
FIG. 3 is a sequence diagram showing an example of a series of operation of an access right setting in the first embodiment of the present invention,
FIG. 4 is a diagram showing one example of a judgment screen in the first embodiment of the present invention,
FIG. 5 is a diagram showing one example of a notice screen of a judgment result in the first embodiment of the present invention,
FIG. 6 is a flowchart showing an example of a series of operation of the access right setting in the first embodiment of the present invention,
FIG. 7 is a diagram showing the whole constitution of the access right setting system in a second embodiment of the present invention,
FIG. 8 is a diagram showing one example of the access request information of FIG. 7,
FIG. 9 is a sequence diagram showing an example of the series of operation of the access right setting in the second embodiment of the present invention,
FIG. 10 is a diagram showing one example of a service list screen in the second embodiment of the present invention,
FIG. 11 is a diagram showing a constitution of a manager's terminal in the access right setting system in a third embodiment of the present invention,
FIG. 12 is a flowchart showing an example of the series of operation of the access right setting in the third embodiment of the present invention,
FIG. 13 is a diagram showing the whole constitution of the access right setting system in a fourth embodiment of the present invention,
FIG. 14 is a diagram showing one example of classification information of an access object resource described in the access request information of FIG. 13,
FIG. 15 is a sequence diagram showing an example of the series of operation of the access right setting in the fourth embodiment of the present invention,
FIG. 16 is a diagram showing the constitution of the manager's terminal in the access right setting system in a fifth embodiment of the present invention,
FIG. 17 is a sequence diagram showing an example of the series of operation of the access right setting in the fifth embodiment of the present invention,
FIG. 18 is a diagram showing one example of a content display screen of the access request information in the fifth embodiment of the present invention,
FIG. 19 is a diagram showing one example of a selection screen in the fifth embodiment of the present invention,
FIG. 20 is a diagram showing the whole constitution of the access right setting system in a sixth embodiment of the present invention,
FIG. 21 is a diagram showing one example of open resource information of FIG. 20,
FIG. 22 is a diagram showing one example of the classification information of an open resource of FIG. 20,
FIG. 23 is a sequence diagram showing an example of the series of operation of the access right setting in a sixth embodiment of the present invention,
FIG. 24 is a diagram showing the whole constitution of the access right setting system in a seventh embodiment of the present invention,
FIG. 25 is a diagram showing one example of illicitly prepared access request information in the seventh embodiment of the present invention,
FIG. 26 is a diagram showing one example of a conversion table in the seventh embodiment of the present invention,
FIG. 27 is a sequence diagram showing an example of the series of operation of the access right setting in the seventh embodiment of the present invention,
FIG. 28 is a flowchart showing an example of the series of operation of the access right setting in the seventh embodiment of the present invention,
FIG. 29 is a diagram showing the whole constitution of the access right setting system in an eighth embodiment of the present invention, and
FIG. 30 is a sequence diagram showing an example of a series of operation between an access right setting apparatus and a mobile terminal in the eighth embodiment of the present invention.

### BEST MODE FOR CARRYING OUT THE INVENTION

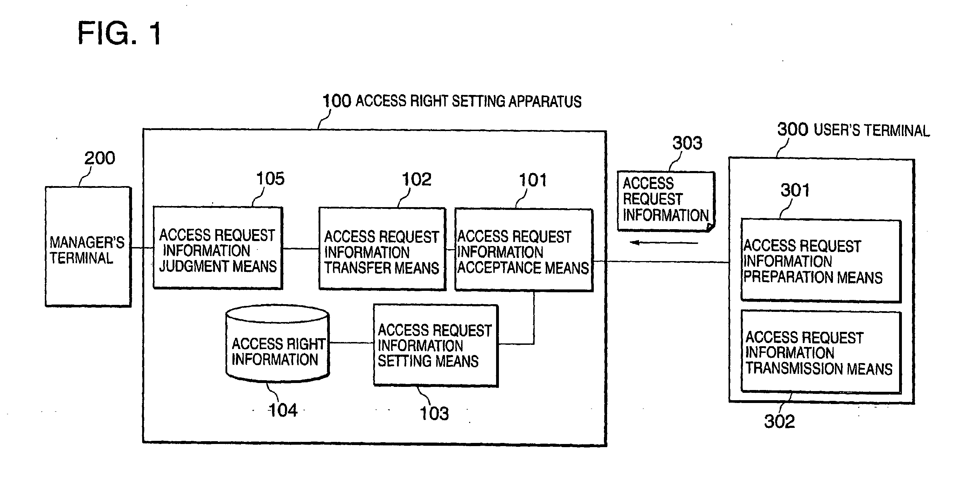

Embodiments of the present invention will be described hereinafter with reference to FIGS. 1 to 30. Additionally, the present invention is not limited to these embodiments, and can be carried out in various modes within the scope of the present invention.

### (First Embodiment)

FIG. 1 shows a constitution of a first embodiment of a whole network system including an access right setting apparatus and manager terminal of the present invention. In the first embodiment, an object is that a user can designate a set content of an access right, a manager only judges whether the designated content is appropriate, and the access right can easily be set.

The network system of the present invention is large, and is constituted of a group of apparatuses such as an access right setting apparatus 100, manager's terminal 200, and user's terminal 300. The access right setting apparatus 100 is an apparatus for setting and managing the access right in order to limit an access to a managed resource. The manager's terminal 200 is a terminal for a manager for confirming the set content of the access right required from the user and setting the access right. Additionally, the manager's terminal 200 is not limited to a remote terminal, and may be considered as the access right setting apparatus 100 per se. The user's terminal 300 is a terminal for use in making a request for an access right setting and actually making an access by the user. The user who uses the user's terminal 300 to make an access cannot freely access a network resource managed by the access right setting apparatus, and the access from the user is limited by an access control based on access right information 104. Additionally, the group of these terminals and the apparatus may be the same apparatus, and any form is not particularly limited. Moreover, a place where the access right managed by the access right setting apparatus 100 is used to perform the access control is not limited to the access right setting apparatus 100, and is not particularly limited. Additionally, the user mentioned in the present invention is not limited to a person, and a case in which a machine automatically operates may be included.

First, constituting elements in the user's terminal 300 will be described. Access request information preparation means 301 is means for preparing access request information 303 as request information for permitting the access to the resource desired to be utilized by the user. The access request information 303 is transmitted to the access right setting apparatus 100 by access request information transmission means 302.

Respective constituting elements in the access right setting apparatus 100 will next be described. Access request information acceptance means 101 is means for accepting the access request information 303 prepared by the user. Access request information transfer means 102 is means for transferring a content of the access request information 303 accepted by the access request information acceptance means 101 to the manager's terminal. Additionally, the transfer of the content is not limited to a remote terminal shown in FIG. 1, and local transfer may be performed within the access right setting apparatus 100. An example of the local transfer will be described hereinafter. Access request information setting means 103 is means for setting the content as the access request information 104, when the manager permits the content of the access request information.

Access request information judgment means 105 is means for judging whether the content of the access request information 303 transferred by the access request information transfer means 102 of the access right setting apparatus 100 is set as the access right information 104. When this means permits the setting, the access request information setting means 103 sets the access right information 104. Additionally, the access request information judgment means 105 may be disposed in the remote terminal instead of the access right setting apparatus 100.

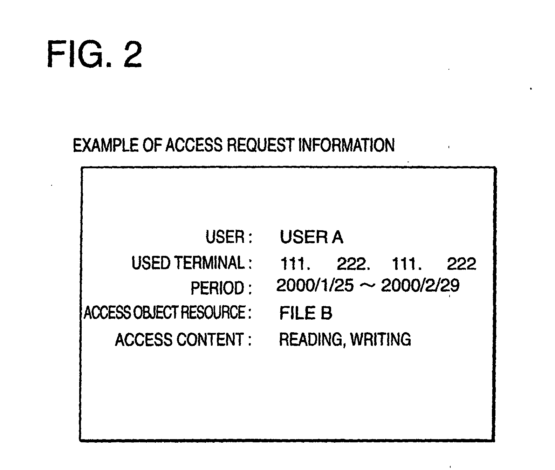

One example of the access request information 303 prepared by the user is shown in FIG. 2. The access request information 303 is prepared according to a common communication agreement (protocol) which can be understood on both sides in order to enable communication between the user and the access right setting apparatus 100, and is described as an artificial language such as XML (Extensible Markup Language) which can be understood by a computer and which is artificially prepared.

Each item shown in FIG. 2 will be described. A "user" represents an identifier (referring to a user ID of the network) for uniquely identifying the user who uses the network, and is used in judging whether the access to the network is permitted by the user (user authentication), or used in notifying the manager of the user having made the request. A "used terminal" represents a place (network address) of the terminal for use in accessing the resource by the user, and is used in limiting the access so that the resource is accessible only by the corresponding terminal. A "period" represents a period in which the access is possible, and is used in limiting the period. An "access object resource" represents a resource with the access thereto desired to be permitted by the user. An "access content" represents a content with the access thereto desired to be permitted by the user. The user can designate the set content of the access right from the aforementioned items. Each item listed in FIG. 2 is one example, and another necessary item may be added as a part of the access request information if any. Moreover, the items described in FIG. 2 are arbitrary, and all is not necessary.

An operation of the access right setting apparatus and system in the network system constituted as described above will be described.

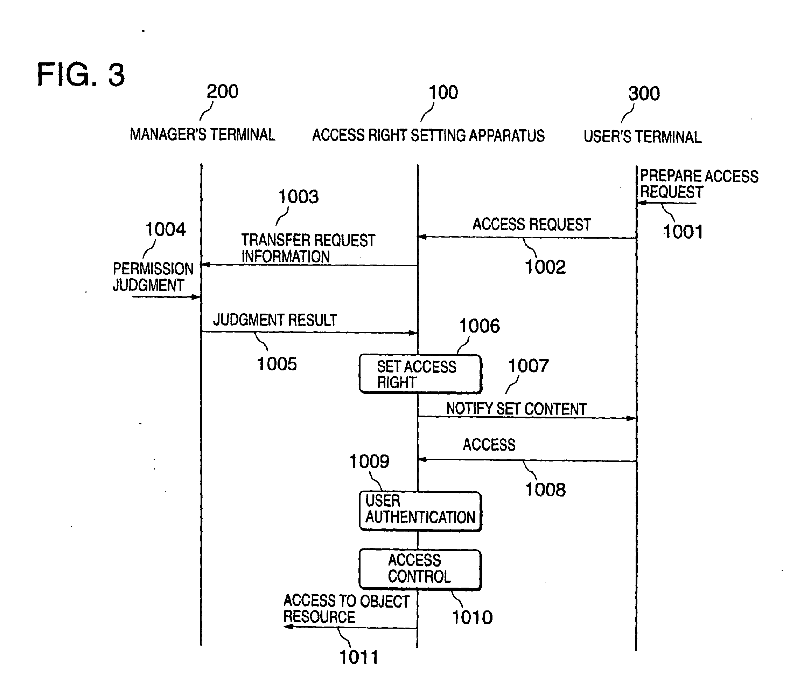

FIG. 3 shows an example of operation among the access right setting apparatus 100, manager's terminal 200, and user's terminal 300. The user prepares the access request information 303 by the access request information preparation means 301 according to the protocol (1001). The access request information 303 prepared by the user is transmitted to the access right setting apparatus 100 by the access request information transmission means 302. Here, it is assumed that information such as an address necessary during transmission to the access right setting apparatus 100 is known beforehand on a user side. The transmitted access request information 303 is accepted by the access request information acceptance means 101 of the access right setting apparatus 100. The access request information 303 may be transmitted alone, or may be transmitted together with an application program for operation in the access right setting apparatus 100. Furthermore, it is assumed that the access request information acceptance means 101 knows and can understand the protocol described in the access request information 303. Additionally, it is assumed that the access request information 303 is reliable information so as to prevent the information from being illicitly set as the access right information 104 (1002).

The received access request information 303 is transferred to the access request information transfer means 102 from the access request information acceptance means 101, and the content is transferred to the access request information judgment means 105. It is assumed that the access request information transfer means 102 knows a transfer destination beforehand. Types of the means such as a computer and network electrical household appliances, and quantity are not particularly limited as long as the means is connected via the network and can transfer the information. A type and quantity of the means are not particularly limited. Moreover, even when the transfer destination is not particularly known beforehand, the user describes the transfer destination (designation of the manager, or designation of a transfer terminal) in the access request information 303, and can thereby designate the transfer destination (1003).

The access request information judgment means 105 of the access right setting apparatus 100 judges whether or not the content of the transferred access request information 303 is set as the access right information 104. The judgment is performed by the person as the manager, and includes, for example, displaying the content of the access request information 303 on the manager's terminal 200, and referring to the displayed content to perform the judgment. Additionally, as a display format, the display format of a natural language is used which is incorporated into the access request information by the user and which can easily be understood by the person, such as a character, sound, and image, or a content of an artificial language for a machine is displayed as it is.

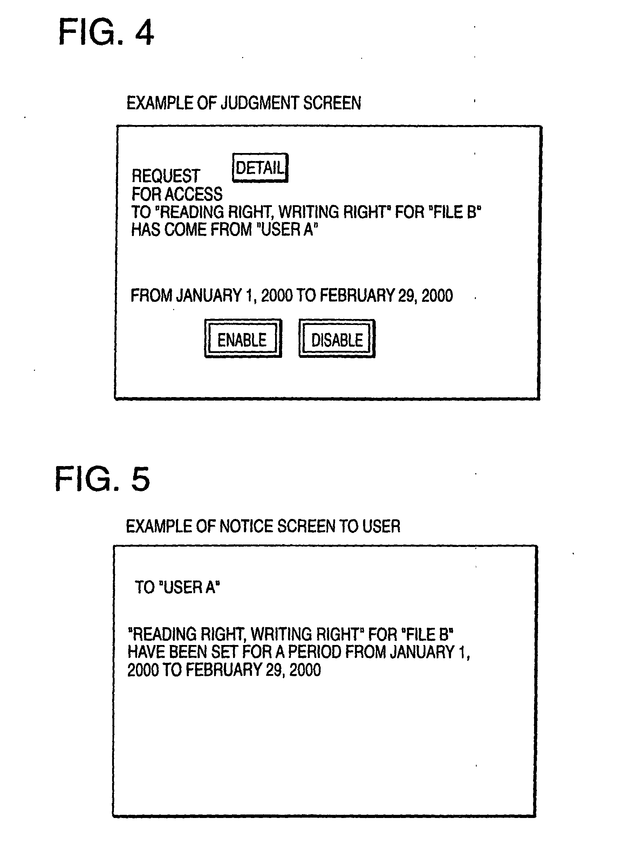

FIG. 4 shows an example of a judgment screen displayed in the manager's terminal 200. In FIG. 4, the content of the access request information 303 shown in FIG. 2 is displayed, and is represented by the natural language using UI (user interface) information such as a character and button.

The natural language is described as a part of the access request information by the user, or is separately displayed by preparing a program for displaying the screen. The manager only judges whether the displayed content is permitted (operation of depressing either of enable and disable buttons in the example of FIG. 4), it is therefore unnecessary to designate the access right in detail, and the access right can simply be set. Additionally, it may be difficult for the manager having little knowledge to judge a user's identity and the designated content of the access right. In this case, a model of acting judgment is also considered in which a skilled expert is asked for the judgment (1004). When the access request information 303 is permitted, the information is returned to the access request information acceptance means 101 of the access right setting apparatus 100 (1005). When the access request information acceptance means 101 having received a judgment result asks the access request information setting means 103 to set the result to the access right information 104, the access request information 303 is set as the access right information 104 as a result (1006). The user's terminal is notified of the safe setting together with the set content.

FIG. 5 shows an example of a notice screen to the user. Additionally, a detail of the set content of the access right shown in FIG. 5 does not have to be notified, and it may only be notified whether or not the setting is possible (1007).

The following constituting elements are not shown in FIG. 1, but the access control will be described based on the set access right information 104. Additionally, as the example, it is assumed that the access control is performed in the access right setting apparatus 100, but a place where the access control is performed is not particularly limited. First, an access to the object resource from the user's terminal arises. Additionally, as described in the operation of the access request of 1002, the access request information 303 may be transmitted together with the application program which operates in the access right setting apparatus 100. In this case, a user who undergoes a use limitation of the resource by the access control can be replaced with the application program (1008). User authentication is performed in order to judge whether the user is permitted to access the network based on user ID information set as the access right information 104. As means of authentication, means using a password is considered (1009). The access right setting apparatus 100 checks the access right in order to judge whether or not the access to the access object resource is possible based on the "used terminal", "period", "access object resource", "access content", and the like set as the access right information 104 (1010). As a result, when the access is permitted, the access to the object resource is enabled (1011).

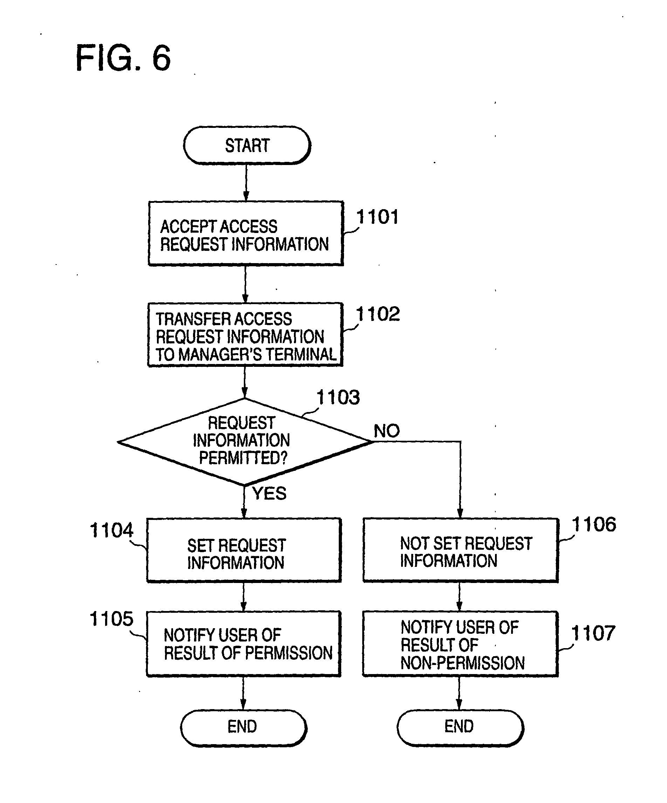

FIG. 6 shows a flowchart until the access right is set. The access request information 303 prepared by the user is accepted (1101). The access request information 303 is understood, and transferred to the manager's terminal 200 (1102). The manager judges the permission of the access request information 303 (1103). In case of permission, the access request information 303 is set (1104), and the user is notified of the result (1105). In non-permission, the access request information 303 is not set (1106), and the user is notified of a result of non-permission. FIG. 6 shows an example of the notice to the user (1107).

According to the first embodiment of the present invention constituted as described above, the access right which has heretofore been determined by the manager can be designated by the user. Conversely, the manager does not have to perform an intricate setting of the access right, and a burden on the manager is reduced. Particularly, considering the home network constituted by connecting the electrical household appliances/AV apparatuses for the network, a home person as the manager has little knowledge of the network, and the present invention can therefore be an effective system in which the access right can simply be set. Moreover, when the home network is connected to external Internet, an unspecified number of users supposedly require frequent and complicated settings, and the present invention can be the effective system.

### (Second Embodiment)

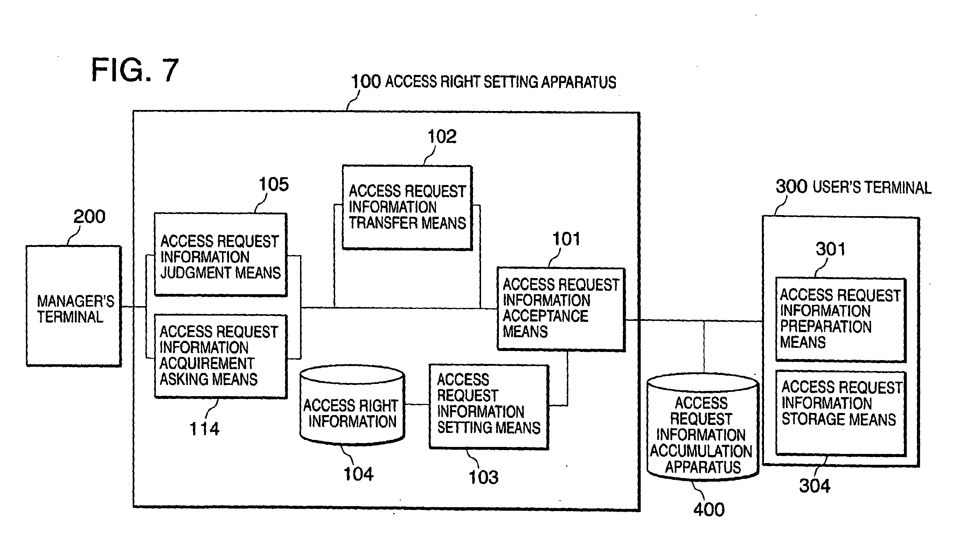

FIG. 7 shows the constitution of the whole network system in a second embodiment of the present invention. In the second embodiment, an object is to acquire the access request information from an access right setting apparatus side without transmitting the access request information from the user's terminal.

In the first embodiment shown in FIG. 1, the access request information 303 is transmitted from the user's terminal 300, and conveyed to the access right setting apparatus 100. However, the present embodiment is different in that the access right setting apparatus 100 includes means for fetching the access request information 303 stored in a certain place by a manager's request.

The constitution of the present embodiment will be described with reference to FIG. 7. Additionally, similarly as the network system described in the embodiment, the constitution is constituted of the access right setting apparatus 100, manager's terminal 200, and user's terminal 300, and some functions are the same. Therefore, only different respects will be described. Additionally, the manager's terminal 200 is not limited to the remote terminal hereinafter, and may be regarded as the access right setting apparatus 100 per se.

The user's terminal 300 includes access request information storage means 304 for use in storing the access request information 303 prepared by the access request information preparation means 301. As a storage destination, an access request information accumulation apparatus 400 exists on the network which can be communicated from the user's terminal. The access right setting apparatus 100 includes the access request information acceptance means 101 for use in acquiring and accepting the access request information 303 accumulated in the access request information accumulation apparatus 400. Moreover, the access right setting apparatus 100 includes access request information acquirement asking means 114 for asking the access request information judgment means 105 to perform an acquirement processing of the access request information 303. Additionally, the access request information acquirement asking means 114 may be disposed not in the access right setting apparatus 100, but in the remote terminal.

It is assumed that the home network is connected to the electrical household appliances/AV apparatuses for the network, and the apparatus is a resource usable from the outside in a limited manner. It is assumed that the user is a security company, and an example of a remote monitor service is considered in which a video camera connected to the home network is accessed and an image of a person's house is acquired. In other words, it can be said that the service is provided to the home network in this example. In general, it is considered that the manager (meaning the home person) of the home network does not have a knowledge of the computer and network, and it is difficult to set the complicated access right. Moreover, there are provided a great variety of services, an outsider different from the home person of the home network (corresponding to a guest in a computer network) is the user of the resource, and more temporary access is required.

Considering from the aforementioned respect, and considering granting of the access right to the user (business person) who provides the service to the home network, a greater variety of purposes than those of the setting of the access right of a usual computer network are considered, and further complicated setting is required. Therefore, a necessity of the mechanism of the setting of the access right described in the first embodiment can be said to increase, in which "the manager does not perform any complicated setting" and "the user can designate the set content of the access right".

One example of the service provided to the home network will be described hereinafter with respect to the remote monitor service by the security company.

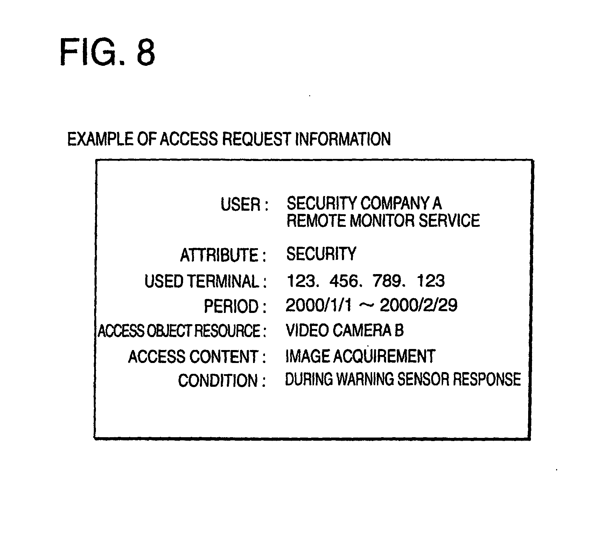

An example of the access request information 303 with the remote monitor service is shown in FIG. 8. The "user" indicates the user ID as the identifier for specifying the user, and is used to identify the user for authentication during log-in to the network. A case in which a security company A provides a plurality of services is also considered, and therefore it is more preferable to prepare the user ID for identifying the user for each service than for each user. An "attribute" indicates the user, or a group to which the service belongs, and is necessary for controlling the access by a group unit. Since the "used terminal", "period", and "access content" are the same as those of the first embodiment, the description thereof is omitted here. An "access object resource" represents the resource which the user desires to utilize. Here, "video camera B" designates and represents the identifier (network address, concrete resource name, and the like) by which the apparatus connected to the home network can uniquely be specified. Finally, a "condition" is the access right information 104 which depends on another factor changing with time. For example, "during a warning sensor response", the access is permitted so that monitoring is performed only at a time of sensor response by an intruding matter, and the access is not permitted at other normal times. Such detailed and flexible setting is also possible.

The operation of the access right setting apparatus and system in the network system constituted as described above will be described.

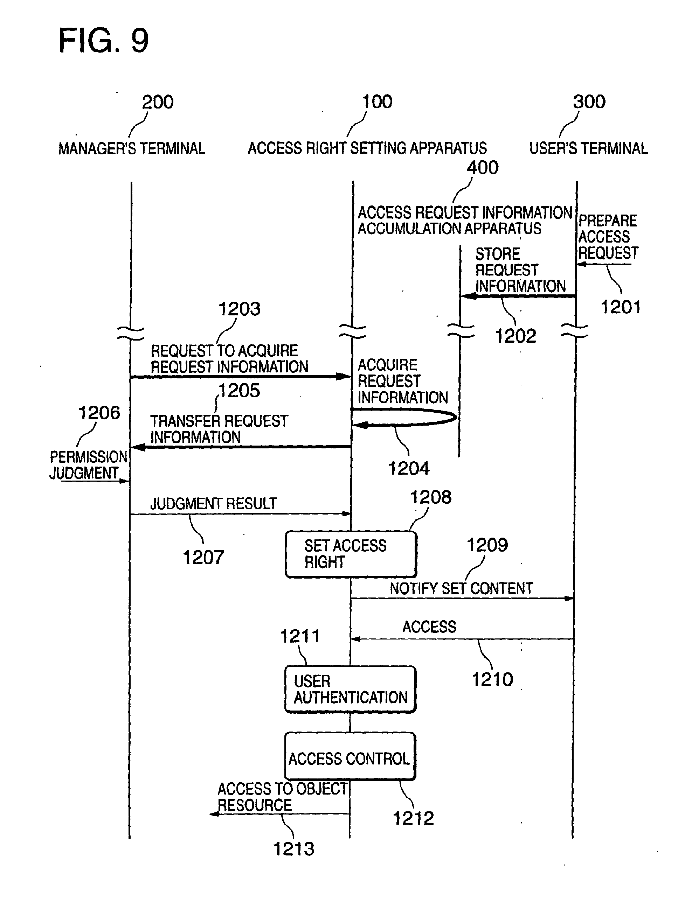

FIG. 9 shows an operation example among the access right setting apparatus 100, manager's terminal 200, user's terminal 300, and access request information accumulation apparatus 400. In this example, it is assumed that the access request information judgment means 105 and access request information acquirement asking means 114 are disposed in the manager's terminal 200. In FIG. 9, new operations 1202 to 1205 are added to the operation example in the first embodiment shown in FIG. 1, remaining 1201 corresponds to 1001, 1206 to 1213 correspond to 1004 to 1011, respectively, and therefore the description thereof is omitted here.

The user uses the access request information storage means 304 to store the access request information 303 prepared by the access request information preparation means 301 in the access request information accumulation apparatus 400 (1202).

Additionally, the access request information accumulation apparatus 400 may be communicable from the user's terminal 300 and access right setting apparatus 100, and an installed place is not particularly limited. The manager accesses the access request information acquirement asking means 114 of the access right setting apparatus 100 from the manager's terminal 200, and asks the access request information acquirement means of the access right setting apparatus 100 to acquire the access request information 303 accumulated in the access request information accumulation apparatus 400. Additionally, it is assumed that the manager sees a list of the access request information 303 existing in the access request information accumulation apparatus 400 and thereby knows the access request information 303 desired to be acquired beforehand.

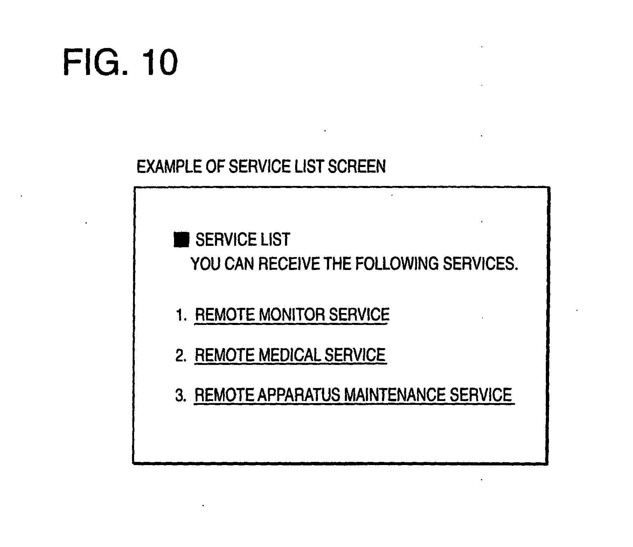

FIG. 10 shows an example of a service list screen to be introduced into the home network. This means that the access request information 303 for each service exists in the access request information accumulation apparatus. In the example of FIG. 10, if the home person as the manager selects the remote monitor service from a service list, a request command for acquiring the access request information 303 of the remote monitor service is transmitted to the access request information acquiring means of the access right setting apparatus 100 (1203). The access request information acceptance means 101 asked by the manager acquires the corresponding access request information 303 from the access request information accumulation apparatus 400. In this case, the access request information 303 may be acquired alone, or may be acquired together with the application program to be operated in the access right setting apparatus 100.

When the information is acquired together with the application program, the content of the access right setting described in the access request information 303 constitutes a content of the access right to the resource to be utilized with respect to the user and application program (1204). The access request information acceptance means 101 transfers the acquired access request information 303 to the access request information transfer means 102, and the content is transferred to the manager's terminal 200 (1205).

According to the second embodiment of the present invention constituted as described above, the user can acquire the access request information from the manager side without making a request for the access right setting, and it is therefore possible to simply set the access right as desired by the manager as in an example in which the aforementioned service of the home network is introduced. Moreover, the information is not transmitted in one direction from the user, the access request information is fetched according to a manager's will, and a possibility of causing an illicit access is effectively lowered.

### (Third Embodiment)

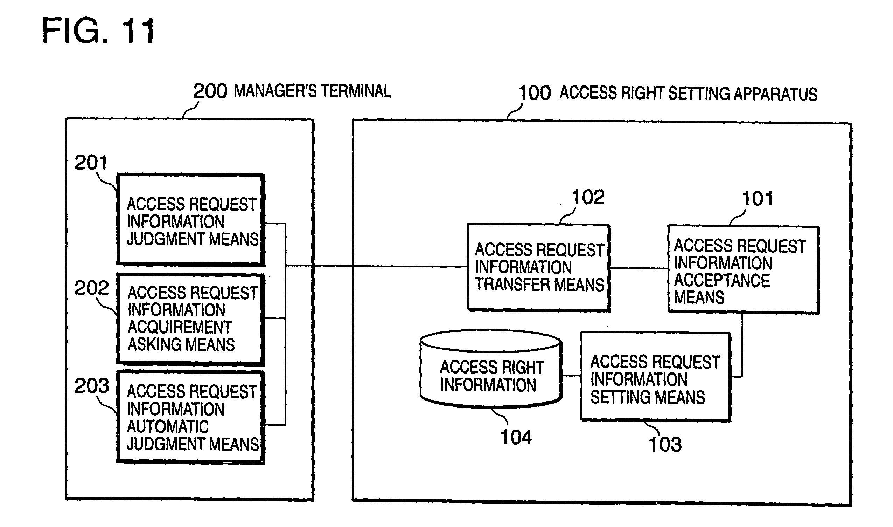

FIG. 11 shows a constitution of the manager's terminal with new means added thereto in the constitution of the whole network system in a third embodiment of the present invention. In the third embodiment, the manager is not the person, and an object is to mechanically and automatically judge whether or not to set the access request information as the access right information 104.

Different from the constitution of the access right setting apparatus 100 in the first embodiment shown in FIG. 1, in FIG. 11 the manager's terminal 200 includes access request information automatic judgment means 203 for mechanically judging whether or not to set the access request information as the access right information 104.

The operation of the access right setting apparatus and system in the network system constituted as described above will be described.

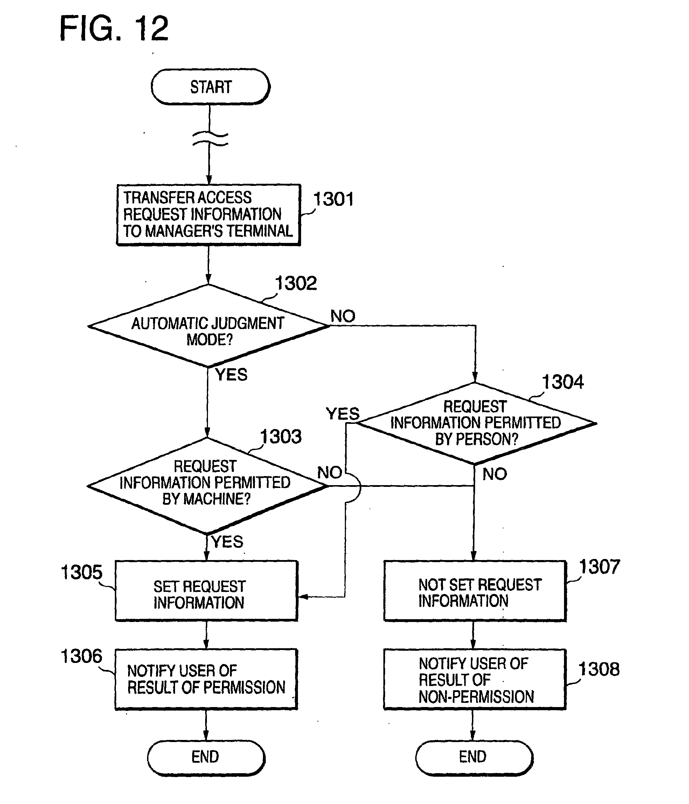

FIG. 12 shows a flowchart until the setting of the access right is performed. Since the operation for accepting and acquiring the access request information 303 is described in the first and second embodiments, the description thereof is omitted here.

The access request information 303 is transferred to the manager's terminal (1301). During the transfer, a judgment mode is confirmed (1302). This judgment mode indicates that either judgment by the person or judgment by the machine is to be performed, and it is assumed that the mode is preset by the manager. Additionally, even when the mode is not set, a default value is assumed to be preset. If the judgment mode is automatic, the access request information automatic judgment means 203 judges enable/disable of the access request information 303. With the judgment by the machine, an algorithm as a judgment standard is registered in the access request information automatic judgment means 203 beforehand, the content described in the transferred access request information 303 is grasped by the algorithm, and it is automatically judged whether or not the content can be set as the access right information 104 (1303). Additionally, the algorithm as the judgment standard is not particularly limited, and therefore is not described here. If the judgment mode is not automatic, access request information judgment means 201 judges enable/disable of the access request information 303 (1304). It is supposed that the manager does not log in the terminal or that the terminal is not started. Then, the access right setting apparatus 100 can judge that the manager cannot perform the judgment in this manner. In this case, a step of switching a processing of judgment to the access request information automatic judgment means 203 may be taken. Since the enable/disable judgment processing by the access request information judgment means 201 is described in the first embodiment, the description thereof is omitted here. Moreover, since the processing steps 1305 to 1308 of the result judged both by the access request information automatic judgment means 203 and the access request information judgment means 201 are described in 1104 to 1107 of the flowchart of FIG. 6 of the first embodiment, the description thereof is omitted here.

According to the third embodiment of the present invention constituted as described above, it is mechanically and automatically judged whether or not the content described in the access request information can be set as the access right information. Therefore, even when the manager does not attend at the terminal, the access right can automatically be set. Moreover, when the access request information having the complicated content of the access right has to be frequently judged, the judgment is switched to an automatic mode, and the access right can also be set without giving any trouble to the manager.

### (Fourth Embodiment)

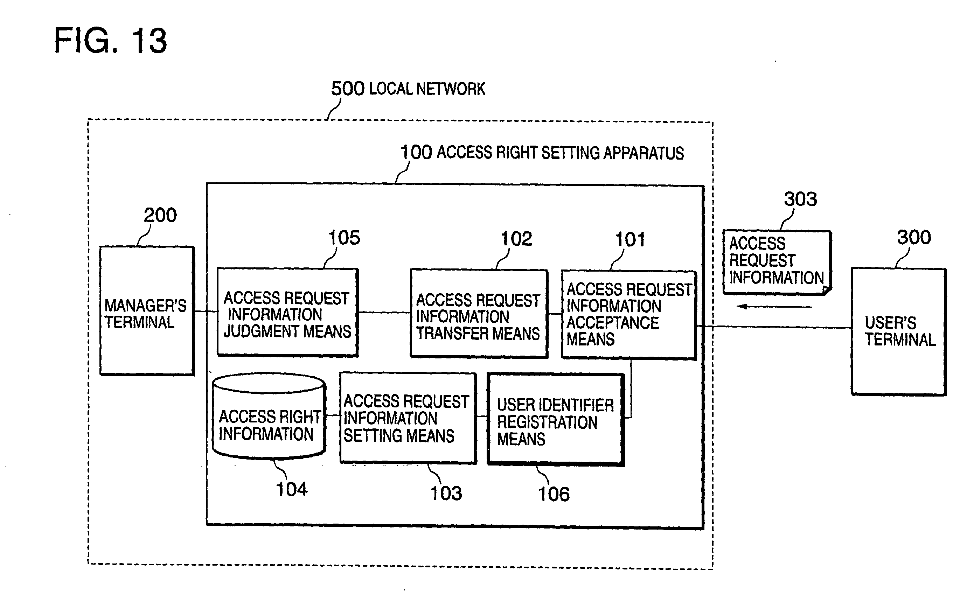

FIG. 13 shows the constitution of the whole network system in a fourth embodiment of the present invention. In the fourth embodiment, an object is to accept the request of the access right setting even from the user who cannot log in the network, and issue an identifier (hereinafter referred to as the user ID) which is necessary for the log-in and which uniquely defines the user.

Different from the constitution diagram of the first embodiment shown in FIG. 1, in the network system shown in FIG. 13, in consideration of the access request from the user (terminal) who has no user ID necessary for logging in a local network 500, user identifier registration means 106 for issuing the user's identifier (user ID) and registering the identifier as a part of the access right information 104 is disposed in the access right setting apparatus 100. Additionally, the constitutions of the manager's terminal 200 and user's terminal 300 are not changed.

For description for ease of understanding, the example of the remote monitor service of the home network described also in the third embodiment will be described hereinafter as an example of the local network 500.

The home network connected to the external network requires the access control by the setting of the access right, or restriction such as rejection of the access in order to prevent an illicit access from the outside. It is hereinafter assumed that the local network 500 shown in FIG. 13 is replaced with the home network, and the user of the external network uses the user's terminal 300 to utilize the resource of the home network. That is, the external user is assumed to be the security company which provides the remote monitor service. The security company before introduction of the service is the outsider, is not permitted to log in the home network or access the resource usually, and does not have the user ID for logging in the home network. To realize the setting of the access right by the request from the user, it is necessary to form a framework in which even the user having no user ID beforehand can make the setting request of the access right by the access request information 303.

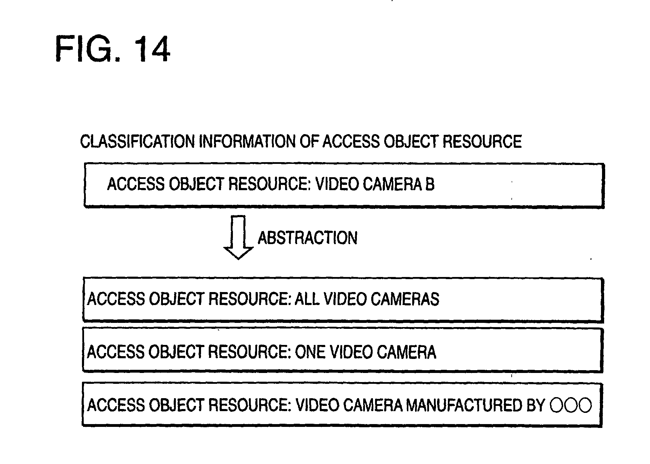

When the user is the outsider having no user ID of the network, the user cannot log in the network, and does not know the resource held by the network in many cases. That is, the user does not know the identifier for uniquely specifying the network, and cannot designate the access object resource described in the access request information 303 as shown in FIG. 8. To solve the problem, the resource may be designated by information of classification constituted by abstracting the identifier of the access object resource. As an easily understandable example, a method of designating the video camera corresponding to the home network is shown in FIG. 14. The "access object resource" is abstracted such as "all video cameras", "one video camera", and "video camera manufactured by Panasonic", and is designated by the classification (hereinafter referred to as classification information). Additionally, the resource designated on the user side has to be understood on the manager (access right setting apparatus) side, and therefore the designation by the classification information can be used in a case in which notation of the resource is standardized and recognized generally (or between the user and the manager). For example, in a certain standard of the home network, the video camera is standardized by a certain code, and the code of the resource described by the user can therefore be understood on the manager side, and can be used as one description form of the access request information 303. Additionally, for example, when a plurality of apparatuses having the same standard, such as "video camera B" and "video camera C", exist in the home network, both the two video cameras are objects of the access right setting with the designation of "all video cameras", either one camera is the object with the designation of "one video camera", and the algorithm for determining the object is not particularly limited.

The operation of the access right setting apparatus and system in the network system constituted as described above will be described.

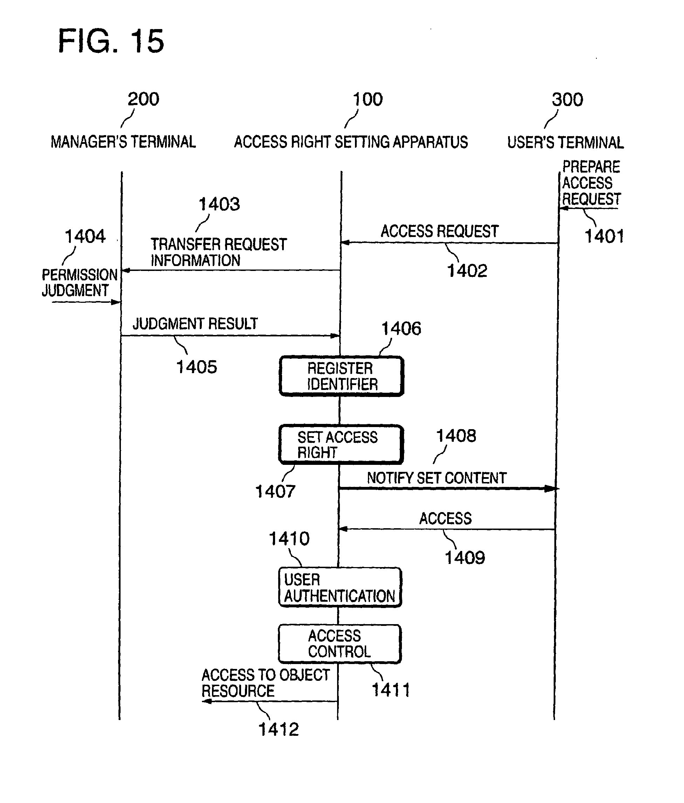

FIG. 15 shows an example of the operation among the access right setting apparatus 100, manager's terminal 200, and user's terminal 300. In this example, it is assumed that the access request information judgment means 105 is disposed in the manager's terminal 200. In FIG. 15, new operations 1406 to 1408 are added to the operation example in the first embodiment shown in FIG. 3, remaining 1401 to 1405 correspond to 1001 to 1005, 1409 to 1412 correspond to 1008 to 1011, respectively, and therefore the description thereof is omitted here. Additionally, in the access request in 1402, when the user transmits the request to the access request information acceptance means 101 of the access right setting apparatus 100, even the request from the user having no user ID can be accepted by the access request information acceptance means 101.

The access request information 303 permitted by the manager using the access request information judgment means 105 in the access right setting apparatus 100 from the manager's terminal 200 is set as the access right information 104, but the user does not have the user ID of the network, and the user ID needs to be registered as a part of the access right information 104. The user ID is required such that the user undergoes the user authentication and can log in the network at the next access to the resource. Moreover, during the access control, the user ID is also required as a key for confirming the access right. The user identifier registration means 106 in the access right setting apparatus 100 determines the user's identifier (user ID) by the information of the "user" of the access request information 303 or an original system, and registers the identifier as a part of the access right information 104. In this case, the manager does not particularly have to be conscious of preparation of the user ID, the user identifier registration means 106 may automatically register the user ID, or the manager may determine the user ID (1406). The access request information setting means sets the access request information 303 as the access right information 104 (1407). The user's terminal is notified of the safe setting together with the set content and user ID (also including a password if the user authentication is performed by the password) (1408).

According to the fourth embodiment of the present invention constituted as described above, the user having no user ID of the network cannot log in the network in the conventional art, and there is no solving measure for making the access request, but the problem is solved by the invention. The present invention can particularly be effective in the home network in which the temporary access from the outsider providing the service is considered. Moreover, an intricate operation for determining and registering the user ID usually by the manager is eliminated. Furthermore, as shown in FIG. 14, the access object resource can be designated with the standardized code, therefore the user does not have to know the identifier information of the resource, the manager does not have to inform the user of the identifier, and there is an effect that the present invention is useful for protecting privacy.

### (Fifth Embodiment)

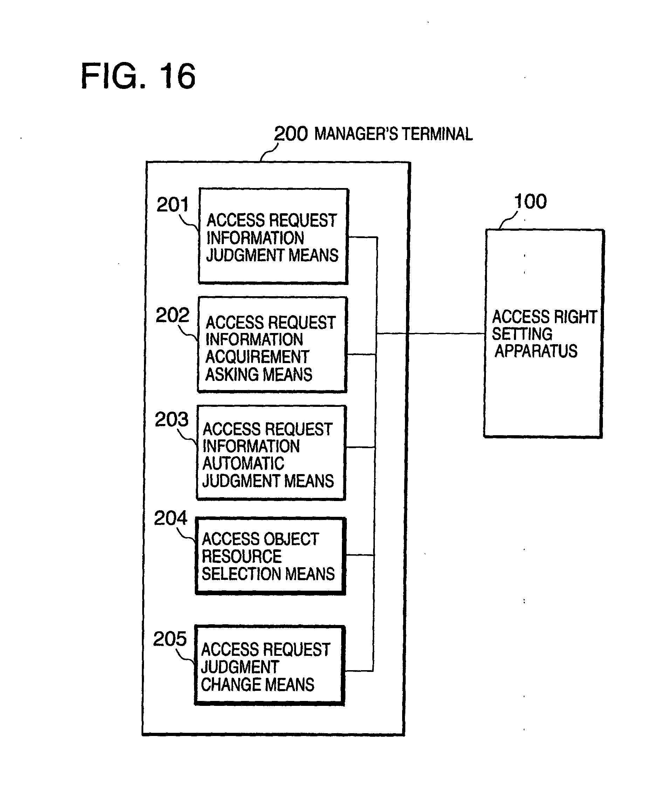

FIG. 16 shows the constitution of the whole network system in a fifth embodiment of the present invention. In the fifth embodiment, an object is to allow even the manager to change the access request information designated by the user, or to allow the manager to determine the access object resource from a plurality of access object resources even when the user designates the access object resource with the classification information.

In the constitution diagram shown in FIG. 16, a new constitution is added to the constitution diagram of the third embodiment shown in FIG. 11. The constitution is different from that of the third embodiment in that the manager's terminal 200 includes access request information change means 205 capable of changing the access request information 303 prepared by the user so as to suit a manager's convenience, and access object resource selection means 204 capable of designating the access object resource by the classification information of the resource and selecting the corresponding resource to be given the access right by the user.

The operation of the access right setting apparatus and system in the network system constituted as described above will be described.

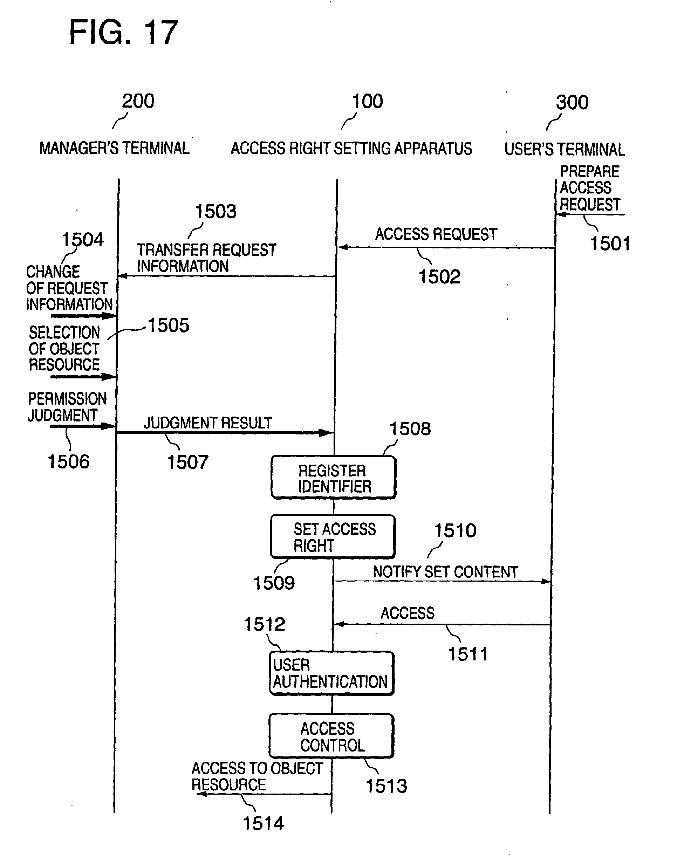

FIG. 17 shows an example of the operation among the access right setting apparatus 100, manager's terminal 200, and user's terminal 300. In FIG. 17, new operations 1504 to 1507 are added to the operation example in the second embodiment shown in FIG. 15, remaining 1501 to 1503 correspond to 1401 to 1403, 1508 to 1514 correspond to 1406 to 1412, respectively, and therefore the description thereof is omitted here.

The access request information 303 prepared by the user is transferred to the manager's terminal 200. When the transferred access request information 303 needs to be changed, the information is changed by the access request information change means 205.

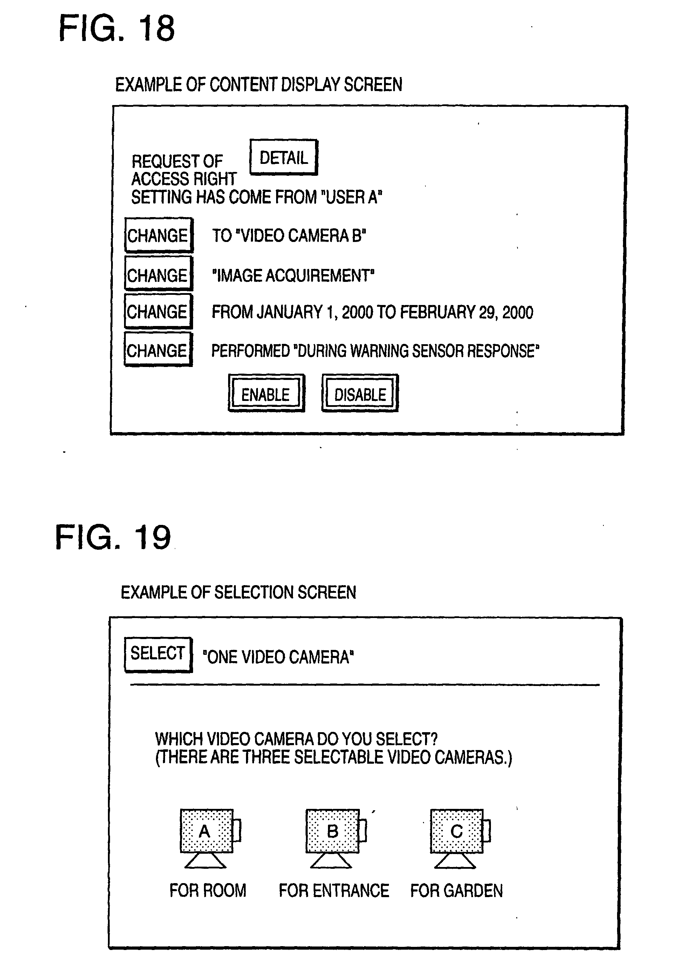

As an example, a case in which the access request information 303 described in the second embodiment and shown in FIG. 8 is transferred will be described. When the manager is the person, it is possible to confirm the content of the access request information 303 displayed in the manager's terminal 200, and change, add, and delete the "period", "access object resource", "access content", and "condition". FIG. 18 shows an example of a display screen of the content described in the access request information 303 in the manager's terminal 200. When the manager depresses a change button of the screen, the access request information change means 205 can change the content of each access request information. The change may be performed while the user and manager negotiate with each other (1504). If the user designates the access object resource with the classification information of the standardized resource, a plurality of resources are set as the access object resource. It is considered that the user does not know the identifier of the resource desired to be utilized and therefore uses the classification information of the resource to designate the access object resource. Therefore, all resources applicable to the designated classification are permitted as the access object resource, and then resources other than the resources whose utilization is intrinsically permitted are possibly permitted. A problem occurs that an access range might be broadened. Therefore, it is preferable to select the resource whose utilization from the user is permitted at a manager's will. An example in which the access object resource is described in the classification information of the resource will be described. With the simple designation of the "video camera", it is necessary to select the resource whose utilization is permitted by a manager's judgment. Additionally, a permitted quantity is not particularly limited. With the designation of "all video cameras", even when the manager does not particularly select the resource with the utilization thereof to be permitted, all the corresponding video cameras are the access object resources (in actual, the identifiers of all resources are registered as the access object resources of the access right information). The resource whose utilization is to be permitted may be limited and selected in accordance with situations. With the designation of "one video camera", the video camera whose utilization is to be permitted has to be selected. FIG. 19 shows an example of a selection screen of the access object resources in a case in which "one video camera" is designated. The access object resource selection means 204 picks up the resource falling under the designated classification information.

The manager selects one or more resources with the access thereto to be permitted from the resources. Additionally, with no permission, it is unnecessary to select the resource. Additionally, to automate the selection, a preferential degree of the selected resource may be designated beforehand (1505). The manager judges the permission of the setting of the access right (1506). When the access request information 303 is permitted, the information is returned to the access request information acceptance means 101 of the access right setting apparatus 100. Additionally, when the request information is changed in 1504, the changed information is returned. Furthermore, when the access object resource is limited/selected in 1505, the identifier information of the selected access object resource is also returned (1507). Additionally, an order of a change processing of 1504, selection processing of 1505 and judgment processing of 1506 is not particularly limited. Moreover, supposing that the home person of the home network is the manager, the person has little knowledge, and it may be difficult to judge the access request information 303 in 1506. In this case, the judgment processing of 1506 is entrusted to the expert (setting agent), the change processing of 1504 and selection processing of 1505 are performed by the home person, and the processings may be divided in this manner. That is, the access request information judgment means 201, access request information change means 205 and access object resource selection means 204 may not be disposed on the same terminal, and may be disposed in a dispersed environment.

According to the fifth embodiment of the present invention constituted as described above, the access request information 303 designated by the user can flexibly be set at the manager's will. Moreover, even when the user not knowing the identifier of the resource uses the classification information of the resource to designate the access object resource, the manager selects the resource with the utilization thereof to be permitted, and an excess access object resource can therefore be prevented from being set. Particularly, as in the example of the home network, even the manager poor in knowledge of the network can simply and effectively change the set content of the access right and designate the access object resource.

### (Sixth Embodiment)

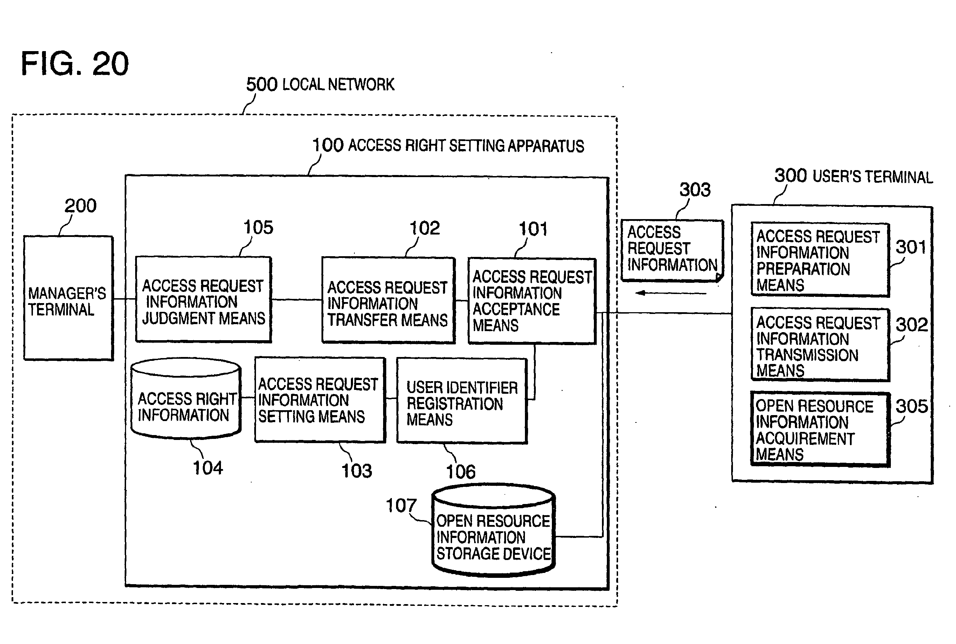

FIG. 20 shows the constitution of the whole network system in a sixth embodiment of the present invention. In the sixth embodiment, an object is to enable the user who cannot log in the network and does not know the identifier of the resource existing in the network or the classification information of the resource existing in the network to acquire these information.

Different from the constitution diagram of the fourth embodiment shown in FIG. 13, in the constitution shown in FIG. 20, information open to the external network out of the identifier information of the resource held by the local network 500 or the classification information, and open resource information acquirement means 305 for acquiring the open information are disposed in the user's terminal 300. Additionally, the constitution of the manager's terminal 200 is not changed.

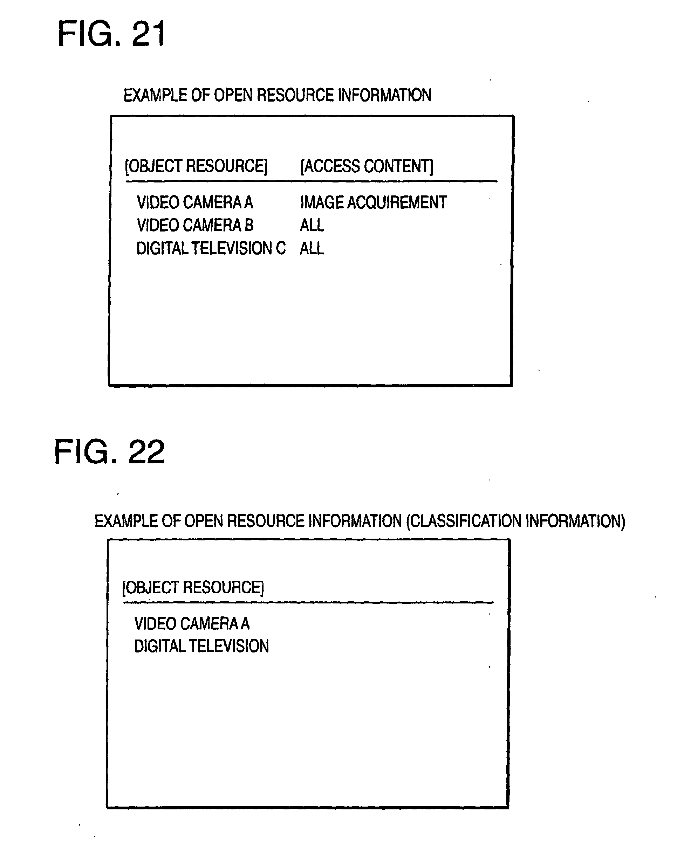

An example of information stored in an open resource information storage device 107 is shown in FIG. 21. The information stored in the open resource information storage device 107 is information open to the user who cannot freely log in and has no user ID at the manager's will, and list information of the identifier and classification of the resources in the local network 500. The information does not necessarily include the information of all the resources, and is limited to the resource which may be open to the external network according to the manager's judgment and the access content. In other words, when the manager does not desire to make public the resource very much, the resource may not be open.

Particularly, in FIG. 21, an item of object resource indicates that there are two video cameras and one digital television as examples of apparatuses of the home network, and each information is information of the identifier capable of uniquely specifying the apparatus (resource). An item of access content indicates that the content is accessible by each apparatus. FIG. 22 shows an example in which the information stored in the open resource information storage device 107 of FIG. 21 is abstracted. In FIG. 22, not the identifier of the apparatus (resource), but the information of classification is shown. Therefore, even if a plurality of video cameras exist, one representation is displayed. Additionally, a place where the information stored in the open resource information storage device 107 exists is not particularly limited as long as the communication from the manager and user is possible.

Usually, unless otherwise notified by the manager, and even when the user cannot log in the network having difficulty in knowing the existence of the resource, the user can use the open resource information acquirement means 305 in the user's terminal 300 to acquire the information stored in the open resource information storage device 107. The acquired information stored in the open resource information storage device 107 can be used as the access request information 303 in designating the resource desired to be utilized and the access content.

The operation of the access right setting apparatus and system in the network system constituted as described above will be described.

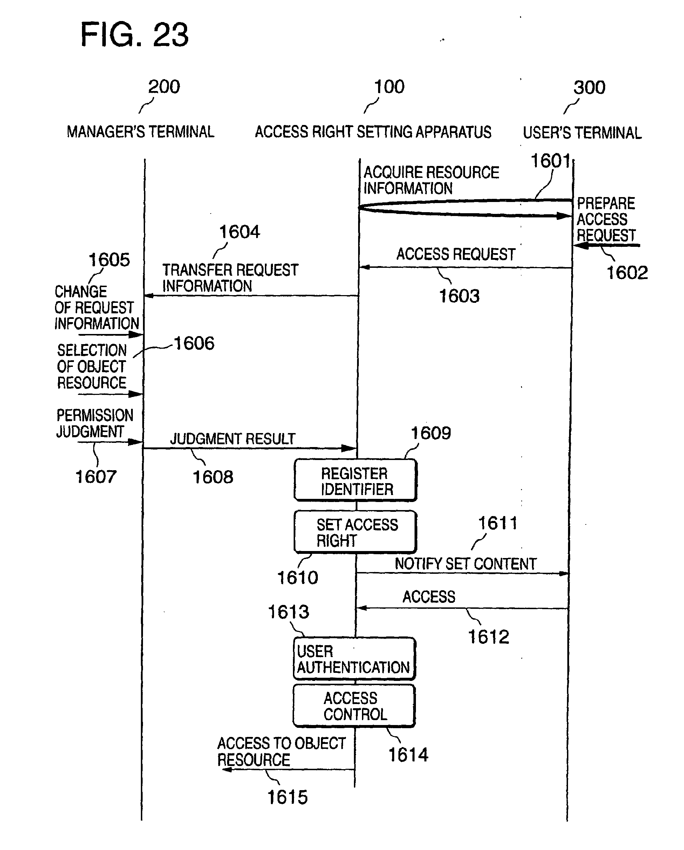

FIG. 23 shows an example of the operation among the access right setting apparatus 100, manager's terminal 200, and user's terminal 300. In this example, it is assumed that the manager's terminal 200 shown in FIG. 16 is used. In FIG. 18, new operations 1601, 1602 are added to the operation example in the fourth embodiment shown in FIG. 13, remaining 1603 to 1615 correspond to 1502 to 1514, and therefore the description thereof is omitted here.

The user who cannot log in the network, or the user who does not know the information of the resource of the network uses the open resource information acquirement means 305 in the user's terminal 300 to acquire the identifier of the resource from the open resource information storage device 107, or the information such as the classification information. Even if the open resource information storage device 107 exists in the access right setting apparatus 100, the user having no user ID necessary for logging in the network can use a certain communication agreement (protocol) to access the device (1601). Since the access object resource can be designated based on the information stored in the acquired open resource information storage device 107, as a result, the access request information preparation means 301 in the user's terminal 300 can be used to prepare the access request information 303 (1602).

According to the sixth embodiment of the present invention constituted as described above, even when the identifier of the resource is not known, the information can instantly be acquired on-line. Particularly, the user who does not have the user ID of the network and cannot log in is considered not to know the identifier of the resource beforehand in most cases. Also from this respect, it can be said that acquirement of the identifier information and classification information is effective means.

### (Seventh Embodiment)

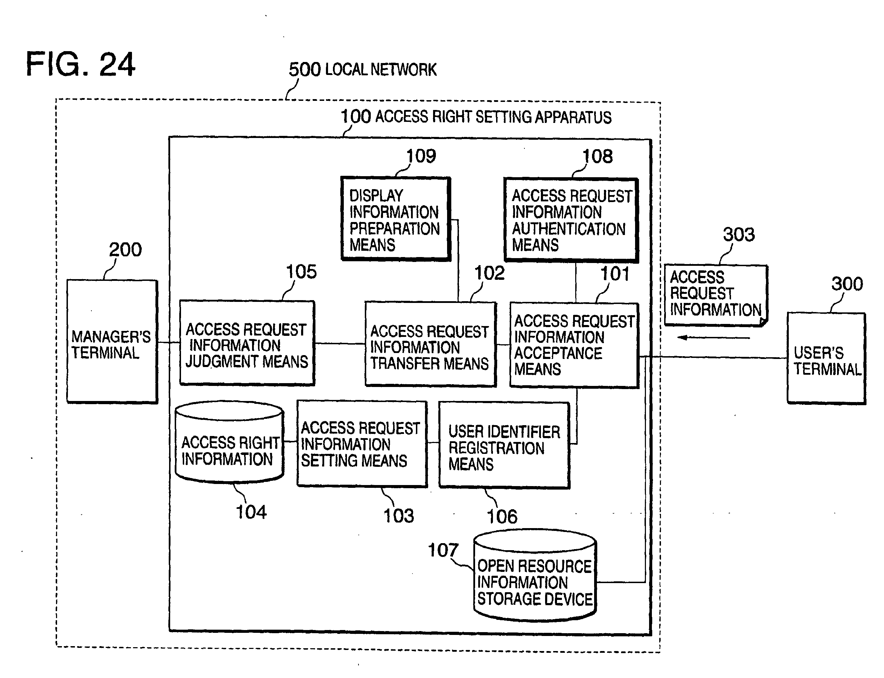

FIG. 24 shows the constitution of the whole network system in a seventh embodiment of the present invention. In the seventh embodiment, an object is to confirm whether the access request information 303 prepared by the user is reliable and to prevent the access right from being illicitly set without letting the person as the manager know that.

Different from the constitution diagram of the sixth embodiment shown in FIG. 20, in the constitution shown in FIG. 24, the access right setting apparatus 100 includes: access request information authentication means 108 for authenticating whether the access request information 303 prepared by the user is reliable information; and display information preparation means 109 for converting the content described in the access request information prepared by the user to the natural language which can visually and easily be understood by the person, and preparing display information. Additionally, the constitutions of the manager's terminal 200 and user's terminal 300 are not changed.

The operation of the access right setting apparatus and system in the network system constituted as described above will be described.

First, a mechanism for authenticating whether the access request information 303 is reliable information will be described.

When services to be introduced into the home network are considered as examples, some of the services are prepared by the third party, all the services are not reliable, and some of the services may cause an illicit action. There is a mechanism of digital signature as means for judging whether or not the service is reliable, and in the present embodiment the mechanism is utilized to confirm the reliability of the service.

The user authentication based on the digital signature utilizing an open key cryptography system as an example will be described hereinafter. When the mechanism of the digital signature is utilized in the access request information 303, "prevention of pretense" such as giving of a false name by an illicit user, "prevention of falsification" such as rewriting of the access request information 303 by the illicit user, "enhancement of reliability" by a user's fact certified by an official certification organization, and the like can be realized.

First, the "prevention of pretense" will be described. A case in which the illicit user obtains the access request information 303 prepared and digitally signed by the user by some means and transmits the information is considered. A user's open key obtained by the manager is usually utilized to perform the user authentication, and it is judged whether the information is transmitted from the user without any doubt. However, in this case, the illicit user, who does not have a secret key forming a pair with the user's open key necessary for the user authentication, fails in the user authentication. Therefore, the pretense can be prevented.

The "prevention of falsification" will next be described. A case in which the illicit user obtains the access request information 303 prepared and digitally signed by the user by some means and falsifies the information is considered. In fact, the information has to be enciphered by the user's secret key. However, the illicit user, who does not have the secret key, cannot but encipher the information with another secret key. On the other hand, the manager decodes the cryptography with the user's public key, but cannot decode the access request information 303 well, and recognizes illicit falsification. Therefore, the falsification can be prevented.

Finally, the "enhancement of user's reliability" will be described. In an example, the CA (Certification Authority) as the reliable third-party certification organization is utilized. Additionally, it is presumed that the CA is in a fair and neutral position, and is an absolutely reliable organization. The user prepares the open key and secret key as the pair for one's own exclusive use, or have the keys prepared by the CA, and applies to the CA for registration of the keys. In this case, the CA refers to a user's identity. When the CA permits the registration by reference to the user's identity, the user's open key is registered and stored in a database of the CA. Moreover, a certificate prepared by enciphering registered user's information with a CA's secret key is transferred to the user. That is, the certificate can be decoded with a CA's open key, and it can then be judged that the user is a reliable user authorized by the CA.

Secondly, a mechanism for preventing the access right from being illicitly set without letting the person as the manager know that will be described.

First, a problem will plainly be described. A case in which software prepared by the third party is executed by one's own computer is considered as an example. An image displayed in the screen and sound are visible to the person. However, the operation of the software is not known in other places invisible to the person. That is, it is possible to prepare the software which operates without any special problem in a range visible to the person and illicitly sets the access right in a range invisible to the person without attracting the person's attention. As a concrete example with the content of the present invention, a malicious user prepares the access request information 303 with natural language information which is described in a representation having no special problem and which the person can easily understand, and artificial language information described with a committed injustice. The access request information 303 is permitted by the manager without letting the manager notice the illicitness, and the access right is set with an illicit content described in the artificial language.

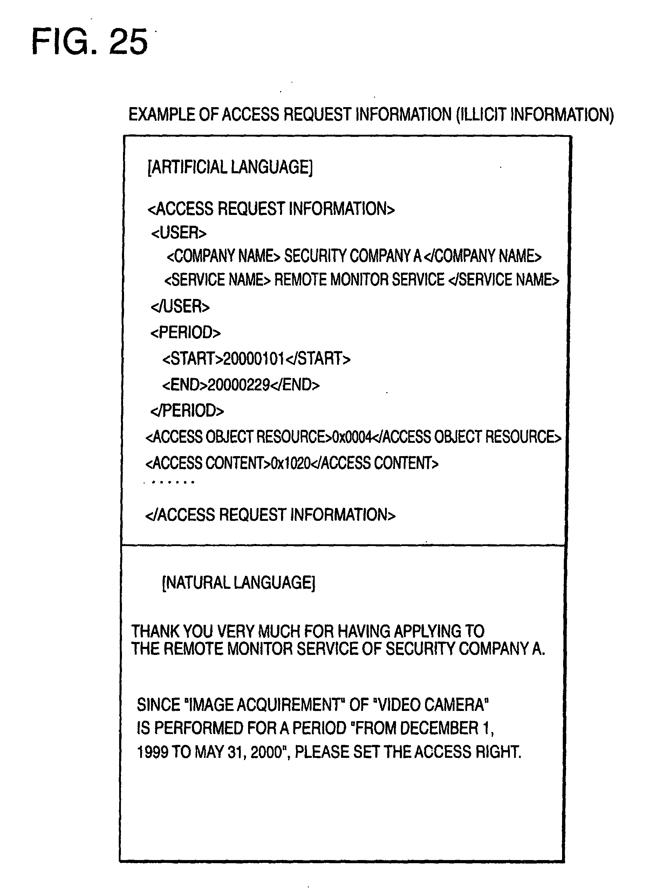

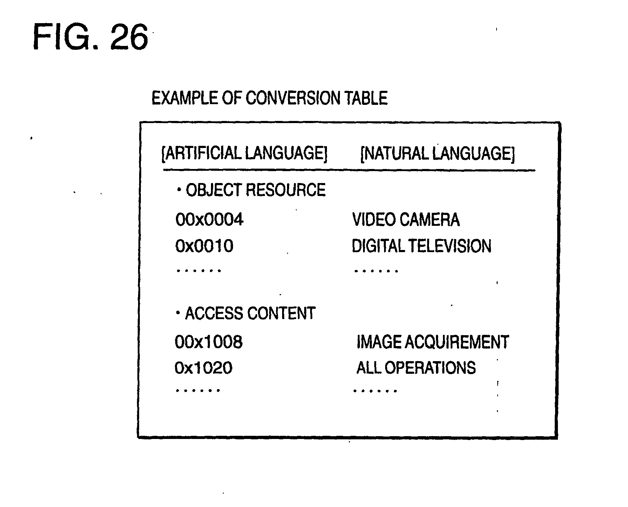

An example of the access request information 303 illicitly prepared by the user is shown in FIG. 25. In FIG. 25, the artificial language and natural language are described in the access request information 303 as an example, and the artificial language is described in XML. Here is a problem. In the artificial language which can be understood by the machine, a "period" in which the resource can be utilized is "2000/1/1 to 2000/2/29", "access object resource" is "0x0004 (= video camera)" (see definition of a code described in a conversion table of FIG. 26, and "access content" is "0x1020 (= all operations)". However, in the natural language which can be understood by the person as the manager, respective different contents "1999/12/1 to 2000/5/31", "video camera", and "image acquirement" are described. The artificial language and natural language have to essentially have the description of the same meaning, but in this example, there can be a possibility that the user cheats the manager, and sets the illicit access right.

Once the access right is illicitly set, the illicit access to the resource is likely to occur, and this raises a problem in security. In the example of the service to be introduced into the home network as described in the second embodiment, naturally it cannot be said that all the services are reliable. There is a possibility that the illicit setting is performed, the household appliance is illicitly accessed, and home information is stolen by some of the services, and a mechanism for solving the problem is required. Additionally, when the manager is a machine, the machine cannot originally understand the natural language, and this mechanism cannot be applied.

In order to prevent such illicit action, a system for preparing the natural language information by one means of the reliable access right setting apparatus is contrived, instead of utilizing the natural language information prepared by the user because the information is not necessarily reliable. The artificial language and natural language are associated and converted based on the access request information 303 including the artificial language information prepared by the user, and the display information of a natural language form is prepared by the display information preparation means 109.

An example of the conversion table showing correspondence used in translating the artificial language into the natural language is shown in FIG. 26.

In FIG. 26, the natural languages corresponding to the respective artificial languages such as the "access object resource", "access content", and "condition" described in the second embodiment and shown in FIG. 8 are described. For example, when the user designates the "object resource" as "0x0004" and "access content" as "0x1020", the display information preparation means 109 of the access right setting apparatus 100 enables the conversion to the natural language by a character string, such as "all operations of the video camera". Additionally, it is presumed that the artificial language is determined according to a certain protocol, and both the user and the manager already know the language. Moreover, in the example of FIG. 26 the natural language is represented in the form of the character string, additionally there are the image, sound, and the like, and any form may be used. Furthermore, the algorithm for using the conversion table of FIG. 26 to prepare the natural language is one example, and a preparation method is not particularly limited.

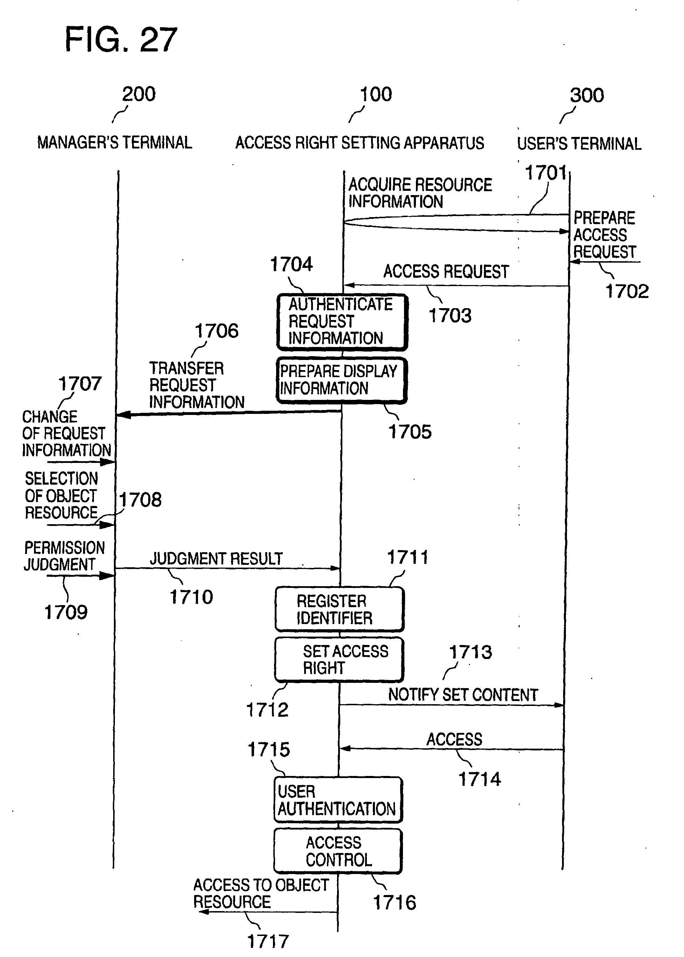

FIG. 27 shows an example of the operation among the access right setting apparatus 100, manager's terminal 200, and user's terminal 300. In this example, it is assumed that the manager's terminal 200 shown in FIG. 16 is used. In FIG. 27, new operations 1704 to 1706 are added to the operation example in the sixth embodiment shown in FIG. 23, remaining 1701 to 1703 correspond to 1601 to 1603, 1706 to 1717 correspond to 1604 to 1615, respectively, and therefore the description thereof is omitted here.

The access request information acceptance means 101 accepts the enciphered access request information 303 and the accompanying certificate issued by the CA, or the digital signature, and asks the access request information authentication means 108 to authenticate the access request information 303. The CA's or user's open key necessary for decoding is transmitted together with the access request information 303, or can be acquired from the accessible DB (database) on the network. The access request information 303 or the certificate enciphered by the corresponding open key is decoded, the user authentication of the user is performed, and the open key and secret key are used to authenticate the user (1704). When the authentication is passed, for the access request information 303 described only in the artificial language by the user, the artificial language is read by the display information preparation means 109, the access request information 303 is converted to the appropriate natural language, and as a result, the display information easily understandable by the person is prepared (1705). The display information prepared by the display information preparation means 109 is transferred to the manager's terminal 200 by the access request information transfer means 102 (1706).

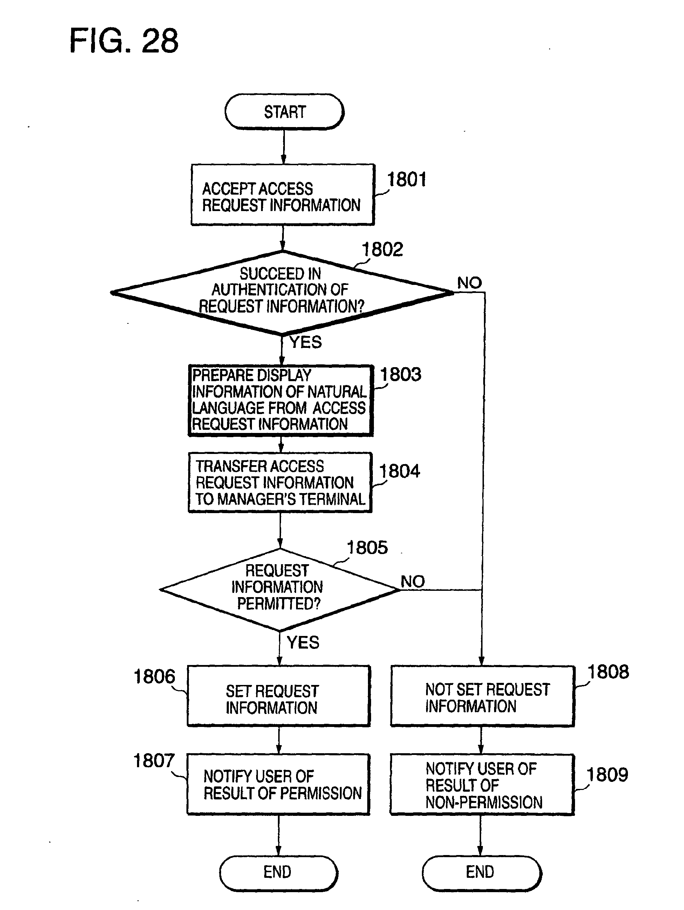

FIG. 28 shows a flowchart of added authentication means of the access request information 303 and means for preparing the natural language from the access request information 303 according to the seventh embodiment.

The access request information 303 prepared by the user is accepted (1801). The digital signature of the access request information 303 is referred to, and it is authenticated whether the information is reliable (1802). When the information is not authenticated, the access request information 303 is not set (1808), and the user is notified of a result of non-permission (1809). When the information is authenticated, the display information preparation means 109 converts the content of the access request information to the natural language, and prepares the display information to be presented to the manager (1803). Since the subsequent flow of 1804 to 1807 is the same as that of 1102 to 1105 shown in FIG. 6, the description thereof is omitted here.

According to the seventh embodiment of the present invention constituted as described above, the mechanism of authentication utilizing the digital signature can be utilized to confirm that the user is reliable and that the access request information 303 is further reliable. Particularly in the home network in which a great variety of services are considered, the existence of the unreliable services scattered on the network is feared for. Therefore, when the mechanism of the authentication is utilized, the illicit service can effectively be prevented from being introduced.

Moreover, there is a fear that the actual set content is misrepresented by the natural language information prepared by the user for the manager to understand the content of the access request information. To solve the problem, the reliable access right setting apparatus has a function for using the natural language understandable by the person to prepare the display information. Therefore, the content designated by the user can faithfully be conveyed to the manager, the illicit access right can be prevented from being set by the user, and the security is effectively enhanced.

### (Eighth Embodiment)

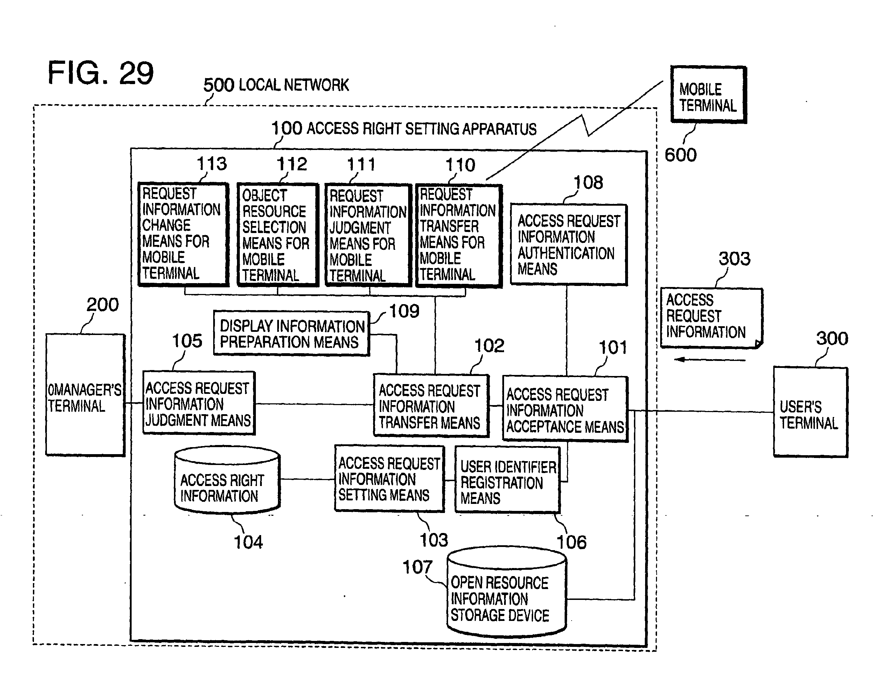

FIG. 29 shows the constitution of the whole network system in an eighth embodiment of the present invention. In the eighth embodiment, an object is to allow a mobile terminal to carry out the judgment of the access request information, limiting selection of the object resource, and change of the content of access request information description, which have been carried out by the manager's terminal.

Different from the constitution diagram of the seventh embodiment shown in FIG. 24, in the constitution shown in FIG. 29, the access right setting apparatus 100 includes: a mobile terminal 600 used by the manager for setting the access right; request information transfer means for the mobile terminal 110 for transferring the access request information 303 to the mobile terminal 600; request information judgment means for the mobile terminal 111 for judging whether or not the access request information 303 can be set as the access right information 104; object resource selection means for the mobile terminal 112 for limiting/selecting the resource from candidates of resources as a plurality of access objects by the mobile terminal 600; and request information change means for the mobile terminal 113 for changing the content described in the access request information 303 by the mobile terminal 600. Additionally, it is assumed that the mobile terminal 600 described herein can relatively freely be carried by the person and includes connection means to the network. Moreover, the constitutions of the manager's terminal 200 and user's terminal 300 are not changed.

The respective means 110, 111, 112, 113 are constituted by extending the respective means 202, 201, 204, 205 in the manager's terminal 200 shown in FIG. 16 for the mobile terminal, and the object may be considered to be the same.

The operation of the access right setting apparatus and system in the network system constituted as described above will be described.

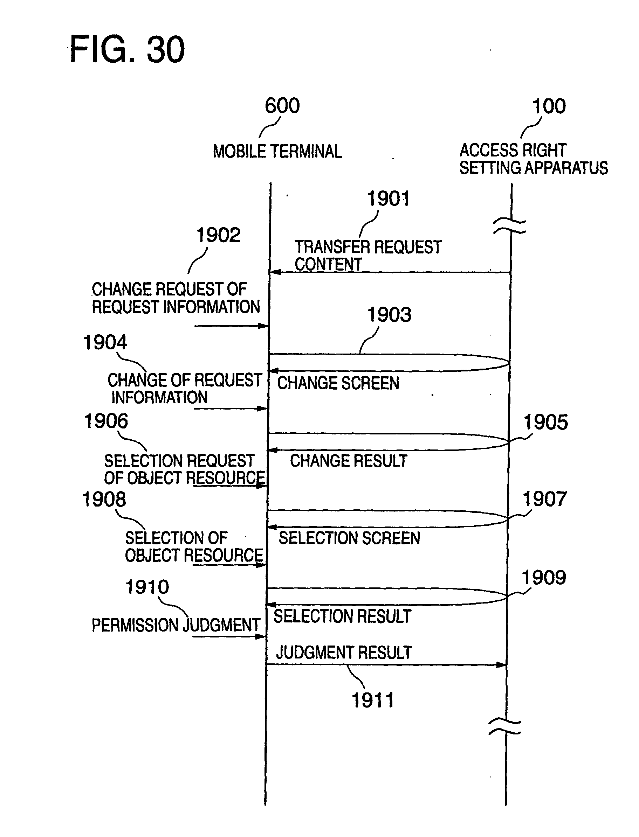

FIG. 30 shows an operation example between the access right setting apparatus 100 and the mobile terminal 600. In FIG. 30, the receiving processing and acquiring processing of the access request information 303, and the setting processing of the access right on receiving the judgment result from the manager in and before the seventh embodiment are omitted, because the operation is the same. Only the operation between the access right setting apparatus 100 and the mobile terminal 600 will be described.

The access right setting apparatus 100 having accepted or acquired the access request information 303 transfers the information to the mobile terminal 600 via the request information transfer means for the mobile terminal 110. An example of the transferred screen is as shown by FIG. 18 (1901). When the manager depresses the change button shown in FIG. 18 on the screen of the mobile terminal 600, a change request of the content of the access request information 303 is made (1902). The request information change means for the mobile terminal 113 having received the request transmits a change screen designated by the manager to the mobile terminal 600 so that the screen is displayed (1903). The manager having received the screen changes the description content of the access request information 303 in the change screen (1904). The request information change means for the mobile terminal 113 having received the change content designated by the manager transmits a change result with the changed content reflected therein to the mobile terminal 600 so that the result is displayed (1905). Next, the manager makes a selection request of the object resource for limiting the access object resource, when there are a plurality of candidates of the access object resources. As described in the fourth embodiment, the selection is a processing which would occur with description of the classification of the resource in the item of the access object resource of the access request information 303 by the user (1906). The object resource selection means for the mobile terminal 112 having received the request transmits a selection screen of the resource designated by the manager and shown in FIG. 19 to the mobile terminal 600 so that the screen is displayed (1907). The manager having received the screen selects the resource for actually setting the access right from the candidates of the access object resources in the selection screen (1908). The object resource selection means for the mobile terminal 112 having received the information of the selected resource designated by the manager transmits a selection result with the selected resource reflected therein to the mobile terminal 600 so that the result is displayed (1909). The manager judges whether or not to permit the setting of the access right (1910). When the access request information 303 is permitted, the information is returned to the request information judgment means for the mobile terminal 111 (1911). Additionally, the order of the change processing of 1902 to 1905, selection processing of 1906 to 1909 and judgment processing of 1910, 1911 is not particularly limited.

According to the eighth embodiment of the present invention constituted as described above, the access right setting apparatus- 100 transfers the content of the access request information 303 to the mobile terminal 600 from the access right setting apparatus 100. The processings such as the permission judgment of the access request information 303, selection of the access object resource, and change of the content described in the access request information 303 can be performed. Therefore, even when the manager goes out, and when the manager goes out with the mobile terminal 600, the processing to be carried out by the manager's terminal 200 can be carried out by the mobile terminal 600. The user does not have to constantly attend at the user's terminal. Moreover, even when the access request information 303 is transmitted or acquired, the information is instantly transferred to the mobile terminal, and real-time setting is possible.

### POSSIBILITY OF INDUSTRIAL UTILIZATION

As described above, according to the present invention, firstly, the user can require setting of an access right and designate a set content, even a manager having no knowledge of a network can simply set the access right, and the user can also set the access right as desired. Moreover, in the network frequently involving the setting of the access right such as introduction of a service into a home network, the setting of the access right is simple and the present invention is particularly effective.

Secondly, access request information can be acquired from a user side, the access right can simply be set as desired by the manager, further the user does not transmit the access request information in one direction, and therefore a degree of danger of an illicit access is effectively lowered.

Thirdly, it can automatically be judged whether or not a content described in the access request information can be set as access right information by a machine, and therefore an intricate operation which has heretofore been performed by a person can be eliminated. Even when the person is absent, the access right can effectively be set.

Fourthly, a user ID can be issued from the received access request information, and can be registered as a part of the access right information. Thereby, the access request information can be accepted even from the user who does not have the user ID of the network and cannot log in.

Fifthly, an access object resource to be described in the access request information prepared by the user can be designated by information of abstracted classification, and there is an effect that the user does not have to know existence or identifier of the resource beforehand, or that the manager does not have to inform the user of information of a secret resource managed by the manager.

Sixthly, when the user designates the access object resource to be described in the access request information by the classification information, the manager can freely select the resource with an access thereto to be permitted from a plurality of candidates of object resources. There is an effect that the number of resources can be limited as desired by the manager, and the access right does not have to be excessively set.

Seventhly, the manager can change the content of the access request information designated by the user, flexible setting is thereby possible while respecting a manager's will instead of designation in one direction, or negotiation is performed with the user, and there is an effect that more accurate setting is possible.

Eighthly, the user can acquire the information of identifier and classification of the resource opened to an external network by the manager, even the user who does not know the information of the resource can describe the access object resource in the access request information, and the setting request of the access right can be made.

Ninthly, the content of the access request information prepared by the user is faithfully converted to a natural language easily understandable by the manager as the person, information to be displayed in a manager's terminal is prepared, and there is an effect that the user is prevented from telling a lie to the manager and illicitly setting the access right.

Tenthly, a digital signature is utilized to authenticate the access request information, and thereby prevention of pretense such as using of others' access request information by the user who is to commit an illicit action, prevention of rewriting of others' access request information, and confirmation of reliability of the access request information can be carried out.

Eleventhly, the content described in the access request information is transferred to a mobile terminal used by the manager, and it is further possible to judge whether the content is set as the access right information. Thereby, the present invention is effective in a case in which the manager is in a remote area, or the accepted access request information is desired to be quickly handled.

Twelfthly, the content described in the sixth effect can also be produced in the mobile terminal utilized by the manager.

Thirteenthly, the content described in the seventh effect can also be produced in the mobile terminal utilized by the manager.

## Claims

1. An access right setting apparatus which can set access right information for limiting utilization of a resource with respect to said resource whose utilization can be limited by setting an access right, **characterized by**:
access request information acceptance means for accepting access request information in which information for requiring the access right setting to said resource is described;
access request information judgment means for judging a content of said access request information accepted by said access request information acceptance means; and
access request information setting means for setting the content of said access request information judged by said access request information judgment means as said access right information.

2. An access right setting apparatus which can set access right information for limiting utilization of a resource with respect to said resource whose utilization can be limited by setting an access right, **characterized by**:
access request information acquirement asking means for asking for acquirement of access request information in which information for requiring the access right setting to said resource is described;
access request information acceptance means for acquiring said access request information designated by said access request information acquirement asking means;
access request information judgment means for judging enable/disable of a content of said access request information acquired by said access request information acceptance means; and
access request information setting means for setting the content of said access request information judged by said access request information judgment means as said access right information.

3. A manager terminal connected to an access right setting apparatus which can set access right information for limiting utilization of a resource with respect to said resource whose utilization can be limited by setting an access right via a network, **characterized by**:
access request information acceptance means for accepting access request information in which information for requiring the access right setting to said resource is described;
access request information judgment means for judging a content of said access request information accepted by said access request information acceptance means; and
access request information setting means for setting the content of said access request information judged by said access request information judgment means as said access right information, said manager terminal comprising:
access request information acquirement asking means for asking for acquirement of the access request information in which the information for requiring the access right setting to said resource is described;
access request information judgment means for receiving said access request information from said access right setting apparatus, and judging enable/disable of the content of said access request information; and
access request information automatic judgment means for automatically performing the enable/disable judgment.

4. A manager terminal connected to an access right setting apparatus which can set access right information for limiting utilization of a resource with respect to said resource whose utilization can be limited by setting an access right via a network, **characterized by**:
access request information acquirement asking means for asking for acquirement of access request information in which information for requiring the access right setting to said resource is described;
access request information acceptance means for acquiring said access request information designated by said access request information acquirement asking means;
access request information judgment means for judging enable/disable of a content of said access request information acquired by said access request information acceptance means; and
access request information setting means for setting the content of said access request information judged by said access request information judgment means as said access right information, said manager terminal comprising:
access request information acquirement asking means for asking for acquirement of the access request information in which the information for requiring the access right setting to said resource is described;
access request information judgment means for receiving said access request information from said access right setting apparatus, and judging enable/disable of the content of said access request information; and
access request information automatic judgment means for automatically performing the enable/disable judgment.

5. The access right setting apparatus according to claim 1 or 2, **characterized by** user identifier registration means for issuing an identifier for uniquely specifying a user, necessary for performing user authentication to make possible connection for the user who cannot connect to said access right setting apparatus for accessing said resource, and registering the identifier as a part of said access request information.

6. The access right setting apparatus according to any one of claims 1, 2, and 5, **characterized by** access request information acceptance means which can accept said access request information designated by an identifier of classification of said resource, not by an identifier for uniquely specifying said resource with respect to designation of said resource as an object of the access right setting described in said access request information.

7. The manager terminal according to claim 3 or 4, **characterized by** access object resource selection means by which a manager can select said resource as an object of utilization from a plurality of resources, when said resource as an object of the access right setting described in said access request information is designated not by an identifier for uniquely specifying said resource, but by an identifier of classification of said resource with respect to designation of said resource as the object of the access right setting described in said access request information, and when there are a plurality of corresponding said resources.

8. The manager terminal according to any one of claims 3, 4 and 7, **characterized by** access request information change means which can change the content described in said access request information received from said access right setting apparatus.

9. The access right setting apparatus according to any one of claims 1, 2, 5 and 6, **characterized by** an open resource information storage device which can store information open to an access originator of said resource among information of not an identifier for uniquely specifying said resource, but an identifier of classification of said resource with respect to designation of said resource as the object of the access right setting described in said access request information.

10. The access right setting apparatus according to any one of claims 1, 2, 5, 6 and 9, **characterized by** display information preparation means which can convert the content described in said access request information to a visually and easily understandable natural language in order to accurately notify said manager of said access request information.

11. The access right setting apparatus according to any one of claims 1, 2, 5, 6, 9 and 10, **characterized by** access request information authentication means for authenticating said access request information in order to confirm that said access request information is not prepared by an illicit action represented by falsification or pretense.

12. The access right setting apparatus according to any one of claims 1, 2, 5, 6, 9, 10 and 11, **characterized by**:
request information transfer means for a mobile terminal for transferring the content described in said access request information to a mobile terminal so that the content is grasped in a remote area; and
request information judgment means for the mobile terminal for performing the enable/disable judgment of said access request information from said mobile terminal.

13. The access right setting apparatus according to claim 12, **characterized by** object resource selection means for the mobile terminal for performing selection of the resource as said access object performed by the access object resource selection means by which said manager can select said resource as the object of the utilization from said plurality of resources from said mobile terminal, when said resource as the object of the access right setting described in said access request information is designated not by an identifier for uniquely specifying said resource, but by an identifier of classification of said resource with respect to designation of said resource as the object of the access right setting described in said access request information, and when there are a plurality of corresponding said resources.

14. The access right setting apparatus according to claim 12 or 13, **characterized by** request information change means for the mobile terminal for performing the change of the content described in said access request information from said mobile terminal.
